# EUROPÄISCHE PATENTSCHRIFT

(11) **EP 1 573 955 B1**
(45) Veröffentlichungstag und Bekanntmachung des Hinweises auf die Patenterteilung: **15.09.2010**
(21) Anmeldenummer: 03789210.6
(22) Anmeldetag: 10.12.2003
(51) Int. Cl.: H04L 9/06

(54) **VERSCHL SSELUNGSVERFAHREN**
ENCODING METHOD
PROCEDE DE CHIFFREMENT

(30) Priorität: 13.12.2002 DE 10258323
(43) Veröffentlichungstag der Anmeldung: 14.09.2005
(73) Patentinhaber: Giesecke & Devrient GmbH, 81677 München (DE)
(72) Erfinder: DREXLER, Hermann, 81371 München (DE); HOFFMANN, Lars, 80639 München (DE); PULKUS, Jürgen, 80469 München (DE)
(74) Vertreter: Metzler, Volker
(86) Internationale Anmeldenummer: PCT/EP2003/014015
(87) Internationale Veröffentlichungsnummer: WO 2004/056035

(56) Entgegenhaltungen:
- WO-A-99/14889
- CA-A- 2 327 037
- FR-A- 2 810 438
- PRENEEL B ET AL: "SECURITY ANALYSIS OF THE MESSAGE AUTHENTICATOR ALGORITHM (MAA)" EUROPEAN TRANSACTIONS ON TELECOMMUNICATIONS, EUREL PUBLICATION, MILANO, IT, Bd. 8, Nr. 5, 1. September 1997 (1997-09-01), Seiten 455-470, XP000720072 ISSN: 1124-318X

## Beschreibung

Die Erfindung betrifft ein Verfahren zum Verschlüsseln eines Klartextes und einen Datenträger, in dem das Verfahren implementiert ist.

Bei einem Verschlüsselungsalgorithmus wird ein Klartext unter Verwendung eines Schlüssels zu einem Chiffretext verschlüsselt. Hier sollen unter dem Begriff Verschlüsselungsalgorithmus auch Algorithmen verstanden werden, die zur Berechnung von Authentication Codes über Klartexte, sogenannten MACs (message authentication code), benutzt werden. Solche Algorithmen werden auch als Hash-Funktion mit Schlüssel (keyed hash functions) bezeichnet. Hier wird aus einem Klartext unter Verwendung eines Schlüssels ein MAC berechnet. Üblicherweise ist eine solche Funktion, im Gegensatz zu einem echten Verschlüsselungsalgorithmus im engeren Sinn nicht umkehrbar, d.h. man kann keine Entschlüsselung mehr durchführen.

Verschlüsselungsalgorithmen werden beispielsweise zur Authentifizierung (gleichbedeutend: Authentisierung) einer ersten Instanz gegenüber einer zweiten Instanz verwendet. Dazu verschlüsselt beispielsweise die erste Instanz mit einem gemeinsamen Schlüssel, über den beide Instanzen verfügen, einen Klartext, den sie zuvor in unverschlüsselter Form von der zweiten Instanz erhalten hat, zu einem ersten Chiffretext, den sie an die zweite Instanz zurücksendet. Die zweite Instanz verschlüsselt den Klartext, unabhängig von der Verschlüsselung durch die erste Instanz, ebenfalls mit dem gemeinsamen Schlüssel und berechnet so einen zweiten Chiffretext. Falls die erste Instanz zur Verschlüsselung tatsächlich den gemeinsamen Schlüssel benutzt hat, stimmen der erste und der zweite Chiffretext überein. Die erste Instanz hat sich dann gegenüber der zweiten Instanz authentisiert, indem sie zu dem erhaltenen Klartext den korrekten Chiffretext zurückgesandt hat. Für die Anwendbarkeit und Zuverlässigkeit dieses Verfahrens ist es unbedingt erforderlich, dass der gemeinsame Schlüssel vor Dritten geheim gehalten wird.

Der Schlüssel lässt sich dadurch ermitteln, dass alle möglichen Schlüssel in dem durch alle Schlüssel aufgespannten Schlüsselraum z.B. auf einem schnellen Computer ausprobiert werden. Die Größe des Schlüsselraums für einen m Stellen langen binären Schlüssel ist dabei 2^{m}. Daher kann in Abhängigkeit von der Schlüssellänge m für die Ermittlung des Schlüssels durch einfaches Ausprobieren eine sehr große Anzahl von Durchführungen des Verschlüsselungsalgorithmus erforderlich sein. Die Schlüssellänge m wird deswegen im allgemeinen so groß gewählt (z.B. m > 70), dass ein solcher Angriff nicht praktikabel ist, da er jahrelang dauern würde.

Effizientere Angriffe nutzen gewisse Schwächen des jeweils verwendeten Verschlüsselungsalgorithmus aus.

Bei diesen Angriffen wird bei der Verschlüsselung der geheime Schlüssel verwendet, und die Klartexte, die mit dem Schlüssel verschlüsselt werden, werden variiert. Genauer wird bei diesen Angriffen eine Mehrzahl von Klartext/Chiffretext-Paaren, d.h. von Paaren aus einem Klartext und einem jeweils zugehörigen Chiffretext, der aus der Verschlüsselung des Klartexts mit dem Verschlüsselungsalgorithmus und mit dem geheimen Schlüssel hervorgeht, gesammelt, die derartige spezifische Eigenschaften haben, dass sich aus den Klartext/Chiffretext-Paaren Information über den geheimen Schlüssel gewinnen lässt (vgl. weiter unten). Bei besonders effizienten Angriffen hat der Angreifer die Möglichkeit, die Klartexte, die er verschlüsseln lassen möchte, gezielt auszuwählen ("chosen plaintext attack"), wodurch das Sammeln der Klartext/Chiffretext-Paare sich gezielt gestalten lässt und daher effizienter ist. Damit diese Angriffe erfolgreich sind, ist es notwendig, genügend Information über den Schlüssel zu sammeln. Dazu ist es erforderlich, genügend viele Klartexte verschlüsseln zu lassen. Daher muss der Verschlüsselungsalgorithmus eine große Anzahl von Malen durchgeführt werden.

Bei einem speziellen effizienten Angriff, der eine Schwäche eines verwendeten Verschlüsselungsalgorithmus ausnutzt, wird als spezifische Eigenschaft, über die sich Information über den geheimen Schlüssel gewinnen lässt, das Auftreten von sogenannten Kollisionen ausgenutzt. Unter einer Kollision wird allgemein verstanden, dass zwei unterschiedliche Klartexte bei einer Verschlüsselung mit dem gleichen Schlüssel und Verschlüsselungsalgorithmus das gleiche Verschlüsselungsergebnis liefern (vgl. unten). Treten solche Kollisionen auf, so kann daraus letzten Endes der geheime Schlüssel ermittelt werden.

Genauer wird unter der Eigenschaft, dass ein Schlüssel (genau) eine Kollision hat; in diesem Dokument verstanden, dass es zu diesem Schlüssel (genau) ein Paar von kollidierenden Klartexten P0, P1 gibt, deren Verschlüsselung durch Anwendung des Verschlüsselungsalgorithmus mit dem Schlüssel, wobei jeder der beiden kollidierenden Klartexte P0, P1 gesondert verschlüsselt wird, den gleichen Chiffretext ergibt, oder deren teilweise Verschlüsselung durch teilweise Anwendung des Verschlüsselungsalgorithmus mit dem Schlüssel oder einem Teil des Schlüssels an irgend einer vorbestimmten Stelle in der Ablaufsequenz des Verschlüsselungsalgorithmus auf dem Rechenweg vom Klartext zum Chiffretext ein gleiches Zwischenergebnis ergibt. Für einen Schlüssel mit n Kollisionen gibt es entsprechend n Paare von kollidierenden Klartexten (P00, P10), (P01, P11), ... (P0n-1, P1n-1), bei denen die beiden kollidierenden Klartexte P0i, P1i innerhalb des jeweiligen i-ten Paars bei einer Verschlüsselung mit dem Schlüssel (oder mit einem Teil-Schlüssel davon) den gleichen Chiffretext oder das gleiche Zwischenergebnis liefern. Speziell ist derjenige Fall einer Kollision interessant, bei dem es einen Teil-Klartext gibt, der mit einem Teil-Schlüssel eine oder mehrere Kollisionen verursacht. In diesem Fall ist es dann möglich, aus den (ein oder mehreren) Kollisionen Informationen über den Teil-Schlüssel zu gewinnen. Dabei ist durch den Teil-Klartext i.d.R. ein Teil des gesamten zu verschlüsselnden Klartextes gebildet, und durch den Teil-Schlüssel ist i.d.R. ein Teil des gesamten Schlüssels gebildet. Da sowohl die möglichen Werte des Teil-Schlüssels als auch die möglichen Werte des Teil-Klartextes einen kleineren Raum aufspannen als den gesamten Schlüsselraum bzw. den gesamten Klartext-Raum, ist es damit möglich, den Teil-Schlüssel sehr effizient anzugreifen. Man kann dann den Angriff auf den Schlüssel auf mehrere Angriffe auf Teil-Schlüssel aufteilen, die sich sehr effizient durchführen lassen. Aus den Teil-Schlüsseln lässt sich dann der Schlüssel wieder rekonstruieren. Dieses Vorgehen ist im allgemeinen deutlich effizienter als den Schlüssel als Ganzes anzugreifen.

Weitere spezielle Methoden, mit denen sich Information über den geheimen Schlüssel gewinnen lässt, sind beispielsweise kryptoanalytische Methoden wie die differenzielle und die lineare Kryptoanalyse.

Bei einem Verfahren zur Erhöhung der Sicherheit gegen Ermitteln des Schlüssels bei einem Verschlüsselungsverfahren wird die Anzahl von zulässigerweise durchführbaren Verschlüsselungen auf eine vorbestimmte Höchstzahl begrenzt. Dazu wird mittels eines Zählers gezählt, wie oft der Verschlüsselungsalgorithmus durchgeführt wird. Sobald der Verschlüsselungsalgorithmus die vorbestimmte Höchstzahl von Malen durchgeführt worden ist, wird er gesperrt, und ein erneutes Durchführen des Verschlüsselungsalgorithmus ist nicht mehr möglich. Somit hat ein Analytiker, der versucht, den Schlüssel durch Sammeln und Auswerten von Klartext/Chiffretext-Paaren zu ermitteln, nur eine begrenzte Anzahl von Versuchen zur Verfügung, die unter Umständen nicht ausreicht, um den gesamten Schlüssel zu ermitteln. Allerdings ist durch die Begrenzung auf die Höchstzahl von Verschlüsselungen zugleich die Nutzungsdauer des Verschlüsselungsalgorithmus eingeschränkt, da der Zähler auch bei jeder regulären Durchführung des Verschlüsselungsalgorithmus hochgezählt wird.

Bei einem weiteren Verfahren zur Erhöhung der Sicherheit gegen Ermitteln des Schlüssels, bei einem Verschlüsselungsverfahren, wird die Anzahl von zulässigerweise durchführbaren Verschlüsselungen in einem vorbestimmten Zeitintervall auf eine vorbestimmte Höchstzahl begrenzt. Bei einem Versuch, den Schlüssel durch Sammeln und Auswerten von Klartext/Chiffretext-Paaren, das heißt durch Durchführen des Verschlüsselungsalgorithmus mit dem stets gleichbleibenden geheimen Schlüssel und mit einer Vielzahl von Klartexten, zu ermitteln, wird bei einer geeigneten Wahl des Zeitintervalls und der Höchstzahl die Höchstzahl im Zeitintervall überschritten und der Verschlüsselungsalgorithmus gesperrt. Nach Ablauf einer Wartezeit wird der Verschlüsselungsalgorithmus wieder freigeschalten. Daher wird die Nutzungsdauer des Verschlüsselungsalgorithmus nicht eingeschränkt. Bei diesem Verfahren sind allerdings während des Zeitintervalls auch nur die Höchstzahl von regulären Durchführungen des Verschlüsselungsalgorithmus möglich. Dies kann zu Einschränkungen in der Benutzerfreundlichkeit führen, da auch bei regulären Durchführungen des Verschlüsselungsalgorithmus die Wartezeit eingehalten werden muss.

Bei besonders strengen Verfahren zur Erhöhung der Sicherheit gegen Ermitteln des Schlüssels, bei einem Verschlüsselungsverfahren, wird die Höchstzahl zulässiger Durchführungen des Verschlüsselungsalgorithmus innerhalb eines vorbestimmten Zeitintervalls auf einen besonders niedrigen Wert gesetzt werden, oder die Länge des Zeitintervalls bei vorgegebener Höchstzahl von zulässigen Algorithmusdurchläufen wird auf einen besonders niedrigen Wert gesetzt. Alternativ können sowohl die Höchstzahl von Durchführungen des Verschlüsselungsalgorithmus als auch das Zeitintervall auf jeweils einen besonders niedrigen Wert gesetzt werden. Dadurch ist allerdings auch die Anzahl durchführbarer regulärer Durchführungen in dem Zeitintervall stark eingeschränkt. Dadurch ist die Anwenderfreundlichkeit des Verschlüsselungsverfahrens stark eingeschränkt.

Aus dem Dokument CA 2 327 037 ist ein Verfahren zum Erkennen von Angriffen gegen Kryptoalgorithmen bekannt. Bei dem Verfahren werden mehrere Sub-Schlüssel verwendet, die aus einem ursprünglichen Schlüssel berechnet werden. In einem Initialisierungsschritt wird über die Sub-Schlüssel und einen fest vorgegebenen Eingangsvektor eine Prüfsumme berechnet und als Referenz-Prüfsumme abgespeichert. Während des Kryptoalgorithmus, bei dem eine Nachricht mit dem Schlüssel verschlüsselt werden soll, wird die Prüfsumme über die Sub-Schlüssel und den Eingangsvektor nochmals berechnet und mit der Referenz-Prüfsumme verglichen. Weichen die beiden Prüfsummen voneinander ab, wird von einem Angriff auf denjenigen Teil des Kryptoalgorithmus ausgegangen, bei dem aus dem Schlüssel die Sub-Schlüssel berechnet werden. Die Referenz-Prüfsumme kann beispielsweise in eine Smart Card eingeschrieben werden, bevor diese an den Nutzer herausgegeben wird.

Der Erfindung liegt die Aufgabe zu Grunde, ein besonders zuverlässiges und anwenderfreundliches Verfahren zur Erhöhung der Sicherheit gegen Ermitteln des Schlüssels, bei einem Verschlüsselungsverfahren, zu schaffen.

Die Aufgabe wird gelöst durch ein Verfahren gemäß einem der unabhängigen Verfahrensansprüche oder Verwendungsansprüche und durch einen Datenträger gemäß einem der unabhängigen Vorrichtungsansprüche.

Bei dem erfindungsgemäßen Verfahren zur Erhöhung der Sicherheit gegen Ermitteln des Schlüssels wird von einem Verschlüsselungsverfahren ausgegangen, bei welchem durch die Anwendung eines Verschlüsselungsalgorithmus auf einen Klartext und einen Schlüssel ein Chiffretext berechnet wird.

Um die Sicherheit zu erhöhen, wird von den Eingangsdaten, nämlich Klartext und Schlüssel, die als Eingabe zur Berechnung des Chiffretextes in den Verschlüsselungsalgorithmus eingegeben werden, zumindest der Klartext vorab oder während des Verfahrens einer Überprüfung gemäß vorbestimmten Kriterien unterzogen und bewertet. Entsprechend der Bewertung werden die Eingangsdaten zur Verarbeitung durch den Verschlüsselungsalgorithmus zur Berechnung des Chiffretextes oder eines Zwischenergebnisses auf dem Rechenweg zum Chiffretext verwendet.

Durch das erfindungsgemäße Verfahren wird somit Sicherheit erreicht, ohne dass die Anzahl von zulässigen Durchführungen des Verschlüsselungsalgorithmus beschränkt zu werden braucht. Damit ist insbesondere auch die Anwenderfreundlichkeit des Verfahrens erhöht.

Die Eingangsdaten, die als Eingabe zur Berechnung des Chiffretextes in den Verschlüsselungsalgorithmus eingegeben werden, können der Schlüssel oder der Klartext oder sowohl der Schlüssel als auch der Klartext sein. Wahlweise wird von den Eingangsdaten zusätzlich zu dem Klartext auch der Schlüssel einer Überprüfung und Bewertung unterzogen.

Insbesondere wird beispielsweise der Schlüssel nach vorbestimmten Kriterien ausgewählt. Zusätzlich werden in jedem Fall die Klartexte, die zur Verschlüsselung in den Verschlüsselungsalgorithmus eingegeben werden, einer Überprüfung gemäß vorbestimmten Kriterien unterzogen und bewertet und nur dann zur regulären Verarbeitung durch den Verschlüsselungsalgorithmus zur Berechnung des Chiffretextes oder eines Zwischenergebnisses auf dem Rechenweg zum Chiffretext zugelassen, wenn sie dementsprechend bewertet worden sind.

Der Klartext weist vorzugsweise mindestens einen Teil-Klartext auf, und der Schlüssel weist vorzugsweise mindestens einen Teil-Schlüssel auf. Typischerweise weist der Klartext eine Mehrzahl von Teil-Klartexten auf und weist der Schlüssel eine Mehrzahl von Teil-Schlüsseln auf.

In der Bewertung ist vorzugsweise enthalten, dass sich aus den Eingangsdaten Information in Bezug auf einen Angriff auf den Verschlüsselungsalgorithmus, der auf ein Ermitteln des Schlüssels abzielt, gewinnen lässt. Dadurch, dass die so geartete Information für die Durchführung des Verfahrens zur Verfügung steht, lässt sich gezielt auf einen Angriff, der auf ein Ermitteln des Schlüssels abzielt, eingehen und der Angriff abwehren. Die Abwehr geschieht dadurch, dass die Durchführung des Verschlüsselungsalgorithmus entsprechend der Bewertung durchgeführt wird.

Gemäß einer ersten Variante des erfindungsgemäßen Verfahrens ist in der Bewertung enthalten, dass sich aus den Eingangsdaten Information in Bezug auf einen künftigen Angriff auf den Verschlüsselungsalgorithmus gewinnen lässt. Vorzugsweise besagt die Bewertung, dass Kollisionen auftreten, wobei das Auftreten einer Kollision darin besteht, dass zwei unterschiedliche Klartexte bei ihrer Verschlüsselung mit dem gleichen Schlüssel und dem gleichen Verschlüsselungsalgorithmus übereinstimmende Chiffretexte oder übereinstimmende Zwischenergebnisse an einer beliebigen bestimmten Stelle auf dem Rechenweg vom Klartext zum Chiffretext liefern. Zwei solche Klartexte werden ein Paar von kollidierenden Klartexten genannt. Aus einem solchen Paar von kollidierenden Klartexten lässt sich der Schlüsselraum einschränken. Durch weitere analoge Schritte lässt sich schließlich der Schlüssel ermitteln. Bei dieser Ausgestaltung der ersten Variante des Verfahrens umfasst die Anwendung des Verschlüsselungsalgorithmus gemäß der Bewertung, dass dabei Schlüssel mit Kollisionen und/oder Paare von zu solchen Schlüsseln gehörigen kollidierenden Klartexten berücksichtigt werden.

Gemäß einer zweiten Variante des erfindungsgemäßen Verfahrens ist in der Bewertung enthalten, dass die Eingangsdaten Information über einen während des Ablaufs des Verfahrens bereits erfolgenden Angriff auf den Verschlüsselungsalgorithmus enthalten.

Bei der zweiten Variante kann die Information insbesondere Klartext-Übereinstimmungen aufweisen, die darin bestehen, dass der Klartext zumindest teilweise mit vorherigen Klartexten übereinstimmt, die bei vorhergehenden Durchführungen des Verschlüsselungsalgorithmus in den des Verschlüsselungsalgorithmus eingegeben worden sind.

Normalerweise sind die Klartexte, die bei aufeinanderfolgenden Durchführungen des Verschlüsselungsalgorithmus zum Zwecke der Authentisierung auftreten, zufällig variable unterschiedliche oder im wesentlichen unkoordiniert übereinstimmende Klartexte. Die Klartext-Übereinstimmungen zeigen - zumindest mit hoher Wahrscheinlichkeit - an, dass gezielt manipulierte Klartexte eingegeben werden, um einen Angriff auf den Verschlüsselungsalgorithmus auszuführen.

Für die Überprüfung, um die Bewertung zu bekommen, werden vorzugsweise Test-Eingangsdaten verwendet, mit denen die Eingangsdaten verglichen werden. Die bei dem Verfahren zur Durchführung des Verschlüsselungsalgorithmus verwendeten Eingangsdaten werden vorzugsweise nach der Durchführung des Verfahrens für nachfolgende weitere Durchführungen des Verfahrens als neue Test-Eingangsdaten für die Überprüfung bereitgestellt. Dabei werden vorzugsweise im Austausch für die neuen Eingangsdaten auszusortierende Test-Eingangsdaten, die bereits für eine Überprüfung bereitgestanden sind und/oder dort verwendet worden sind, ersetzt, wobei die auszusortierenden Test-Eingangsdaten bei einer nachfolgenden Überprüfung nicht mehr als Test-Eingangsdaten zur Durchführung der Überprüfung bereitgehalten werden. D.h. der für die Überprüfung verwendete Satz von Test-Eingangsdaten wird laufend aktualisiert, vorzugsweise bei jeder Durchführung des Verschlüsselungsalgorithmus.

Das erfindungsgemäße Verfahrens kann so verwendet werden, dass die Eingangsdaten, beispielsweise der Schlüssel und/oder die Klartexte, vorab gezielt ausgewählt werden und der Verschlüsselungsalgorithmus mit den gezielt ausgewählten Eingangsdaten ausgeführt wird. Diese gezielte Auswahl kann bei jeder Durchführung des Verfahrens durchgeführt werden. Alternativ wird die gezielte Auswahl nur einmalig durchgeführt. Bei einem Verfahren, das in einen Datenträger implementiert ist, und bei einem gezielt ausgewählten Schlüssel kann die gezielte Auswahl beispielsweise dadurch durchgeführt werden, dass der Datenträger vorab einmalig mit dem Schlüssel personalisiert wird.

Alternativ kann das Verfahren so verwendet werden, dass die Eingangsdaten während jeder Durchführung überprüft und bewertet werden. Beispielweise werden die eingehenden Klartexte überprüft und bewertet und gemäß der Bewertung entweder verwendet oder nicht verwendet oder gemäß einem veränderten Verfahren verwendet. Das veränderte Verfahren kann z.B. darin bestehen, einen anderen Schlüssel zu verwenden.

Zur weiteren Erhöhung der Sicherheit des Verfahrens kann zusätzlich die Anzahl von zulässigen Durchführungen des Verschlüsselungsalgorithmus beschränkt sein. Dabei kann in der Regel auf Grund der erfindungsgemäßen Sicherheitsmaßnahmen die Höchstgrenze der zulässigen Durchführungen des Verschlüsselungsalgorithmus, ab deren Erreichen oder Überschreiten der Verschlüsselungsalgorithmus gesperrt wird, höher festgesetzt sein als ohne die erfindungsgemäßen Sicherheitsmaßnahmen. Dadurch hat das erfindungsgemäße Verfahren auch bei derjenigen Ausgestaltung, bei der es mit einer Beschränkung der Höchstzahl von zulässigen Durchführungen des Verschlüsselungsalgorithmus ausgestattet ist, ein besonders hohes Maß an Anwenderfreundlichkeit.

Bei einer spezifischeren Ausgestaltung des Verfahrens zur Erhöhung der Sicherheit gegen Ermitteln des Schlüssels gemäß der ersten Variante des Verfahrens wird
- in einem Rechenschritt zumindest ein Teil des Verschlüsselungsalgorithmus auf zumindest einen Teil-Klartext des Klartexts und zumindest einen Teil-Schlüssel des Schlüssels angewendet, so dass ein Verschlüsselungsergebnis berechnet wird, das als der Chiffretext oder zumindest als ein Zwischenergebnis, aus dem sich der Chiffretext durch weitere Rechenschritte berechnen lässt, bereitgestellt wird, wobei
- der Schlüssel derart ausgewählt ist, dass jeder seiner Teil-Schlüssel für jeden Teil-Klartext eine jeweilige vorbestimmte Anzahl von Kollisionen hat, wobei die Anzahlen für jeden Teil-Schlüssel aus einer vorbestimmten Menge möglicher Anzahlen von Kollisionen bestimmt sind.

Bei dieser ersten Variante wird die besondere Sicherheit des Verfahrens bei gleichzeitiger Anwenderfreundlichkeit dadurch erreicht, dass nur solche Schlüssel zugelassen werden, bei denen unabhängig davon, welcher Klartext bzw. Teil-Klartext zur Verschlüsselung mit dem Schlüssel bzw. Teil-Schlüssel in den Verschlüsselungsalgorithmus eingegeben wird, nur vorbestimmte Anzahlen von Kollisionen auftreten können. Mit anderen Worten werden, im Hinblick auf Kollisionen, nur sichere Schlüssel zugelassen und unsichere Schlüssel von der Verwendung ausgeschlossen.

Bei einer spezifischeren Ausgestaltung des Verfahrens zur Erhöhung der Sicherheit gegen Ermitteln des Schlüssels gemäß der zweiten Variante des Verfahrens wird
- ein Überprüfungsschritt durchgeführt, bei dem der Klartext daraufhin überprüft wird, ob er mit dem Test-Klartext gemäß vorbestimmten Übereinstimmungs-Kriterien übereinstimmt, und,
- falls bei dem Überprüfungsschritt entsprechende Übereinstimmung festgestellt wird, der Wert eines Zählers inkrementiert, und,
- solange der Wert des Zählers kleiner als ein vorbestimmter Höchst-Zählwert ist, in einem Rechenschritt zumindest ein Teil des Verschlüsselungsalgorithmus auf den Klartext oder zumindest einen Teil davon und den Schlüssel oder zumindest einen Teil davon angewendet, so dass ein Verschlüsselungsergebnis berechnet wird, das als der Chiffretext oder zumindest als ein Zwischenergebnis, aus dem sich der Chiffretext durch weitere Rechenschritte berechnen lässt, bereitgestellt wird.

Bei dieser zweiten Variante des erfindungsgemäßen Verfahrens wird die besondere Sicherheit des Verfahrens bei gleichzeitiger Anwenderfreundlichkeit dadurch erreicht, dass die Klartexte, die in den Verschlüsselungsalgorithmus eingegeben werden, bewertet werden und, falls die Klartexte, nicht nur sporadisch oder zufällig verteilt, sondern gemäß den vorbestimmten Kriterien, als unsicher eingestufte Eigenschaften haben, eine Sperre gesetzt wird, die beispielsweise darin bestehen kann, dass die Ausführung des Verfahrens oder zumindest die Verwendung des daraus hervorgehenden Verschlüsselungsergebnisses verweigert wird.

Die Kollisionen bei der ersten Variante können durch den gesamten Schlüssel verursachte Kollisionen zwischen gesamten Klartexten sein, d.h. die Teil-Klartexte können mit den gesamten Klartexten identisch sein und die Teil-Schlüssel mit den gesamten Schlüsseln identisch sein. Vorzugsweise sind die Kollisionen durch Teil-Schlüssel verursachte Kollisionen zwischen Teil-Klartexten. Weiter vorzugsweise weist der Schlüssel eine Mehrzahl von Teil-Schlüsseln auf und weist der jeweilige Klartext eine jeweilige Mehrzahl von Teil-Klartexten auf.

Gemäß einer ersten Ausgestaltung der ersten Variante werden nur solche Schlüssel zugelassen, die keine Kollision haben. Kollision bedeutet an dieser Stelle, ebenso wie bei weiteren Ausgestaltungen und Varianten, wiederum eine Kollision zwischen gesamten Klartexten oder zwischen Teil-Klartexte, verursacht durch einen gesamten Schlüssel bzw. durch einen in dem Schlüssel enthaltenen Teil-Schlüssel.

Ein besonderer Vorteil bei dieser ersten Ausgestaltung der ersten Variante des Verfahrens besteht darin, dass bei der Durchführung des Verfahrens keine Kollisionen auftreten. Daher bietet das Verfahren für Angriffe, mit denen versucht wird, den Schlüssel auszulesen, keine Angriffsmöglichkeiten über Kollisionen.

Bei weiteren Ausgestaltungen des Verfahrens kann der Schlüssel so ausgewählt sein, dass beispielsweise höchstens zwei Kollisionen auftreten, oder dass höchstens eine Kollision auftritt, oder dass entweder eine oder zwei Kollisionen auftreten, oder dass entweder zwei oder vier Kollisionen auftreten etc.. Diese Ausgestaltungen haben insbesondere den Vorteil, dass die Anzahl von Kollisionen nicht sehr hoch ist. Je weniger Kollisionen auftreten, umso schwerer ist aber ein Angriff über Kollisionen. Daher sind die Angriffsmöglichkeiten über Kollisionen stark erschwert.

Gemäß weiteren Ausgestaltungen der ersten Variante hat ein Teil-Schlüssel mindestens eine Kollision. Vorzugsweise hat der Teil-Schlüssel zugleich höchstens eine vorbestimmte Anzahl von Kollisionen.

Im Fall, dass mindestens eine Kollision auftritt, ist das erfindungsgemäße Verfahren vorzugsweise zusätzlich mit einem weiteren Sicherheitsmerkmal ausgestattet. Dieses Sicherheitsmerkmal besteht darin, dass vor der Anwendung des Verschlüsselungsalgorithmus der Teil-Klartext daraufhin überprüft wird, ob er zu einem kollidierenden Paar von Teil-Klartexten gehört, für die mindestens ein Teil-Schlüssel mindestens eine Kollision hat. Mit anderen Worten wird überprüft, ob mit dem spezifischen verwendeten Verschlüsselungsalgorithmus und mit dem spezifischen verwendeten geheimen Teil-Schlüssel mindestens eine Kollision auftritt, sei es am Ende des Verschlüsselungsalgorithmus oder bei einem beliebigen Zwischenergebnis, sei es zwischen gesamten Klartexten oder zwischen Teilen von Klartexten. Diejenigen Teil-Klartexte, die bei dem verwendeten Verschlüsselungsalgorithmus und Teil-Schlüssel mindestens eine Kollision haben, sind als indizierte Teil-Klartexte (sogenannte "indexed challenges") vorgemerkt. Hier sei noch einmal darauf hingewiesen, dass in der Bezeichnungsweise in diesem Dokument als Spezialfall eines Teil-Klartextes durch den Teil-Klartext bereits der gesamte Klartext gebildet sein kann und als Spezialfall eines Teil-Schlüssels durch den Teil-Schlüssel bereits der gesamte Schlüssel gebildet sein kann. Jede Kombination von einem Verschlüsselungsalgorithmus und einem Teil-Schlüssel hat dabei ihren eigenen Satz von indizierten Teil-Klartexten. Falls die Überprüfung ergibt, dass der Teil-Klartext zu einem solchen kollidierenden Paar von Teil-Klartexten gehört, wird auf Grund der Überprüfung für mindestens einen der beiden Teil-Klartexte aus dem Paar von kollidierenden Teil-Klartexten verhindert, dass ein unter Verwendung des Verschlüsselungsalgorithmus mit dem Teil-Schlüssel und mit dem Teil-Klartext aus dem kollidierenden Paar gewonnenes Verschlüsselungsergebnis als Chiffretext bzw. Zwischenergebnis bereitgestellt wird.

Dadurch, dass verhindert wird, dass das gewonnene Verschlüsselungsergebnis als Chiffretext bzw. Zwischenergebnis bereitgestellt wird, wird erreicht, dass Kollisionen, die bei dem Verfahren auftreten, nach außen hin nicht sichtbar werden, sondern vor einem potenziellen Angreifer verborgen werden. Daher kann ein Angreifer aus den Kollisionen, obwohl sie auftreten, keine Informationen über den geheimen Schlüssel gewinnen.

Falls die jeweilige Kollision zwischen echten Teil-Klartexten auftritt, die jeweils in einen größeren gesamten Klartext eingebettet sind, wird die Überprüfung des jeweiligen Teil-Klartextes vorzugsweise in Verbindung mit einer Überprüfung des größeren gesamten Klartextes, in den er eingebettet ist, durchgeführt. Praktisch wird dies vorzugsweise so durchgeführt, dass es indizierte Teil-Klartexte ("indexed challenges") gibt, von denen bekannt ist, dass sie mit dem verwendeten geheimen Schlüssel mindestens eine Kollision haben. Ein an den Verschlüsselungsalgorithmus übergebener gesamter Klartext wird daraufhin überprüft, ob er indizierte Teil-Klartexte enthält. Falls ja, wird für die indizierten Teil-Klartexte wie oben beschrieben verhindert, dass das Verschlüsselungsergebnis weiterverwendet wird.

Zum beschriebenen Verhindern des Bereitstellens des Verschlüsselungsergebnisses kann vorgesehen sein, dass der Verschlüsselungsalgorithmus zwar - zumindest teilweise - durchgeführt wird, das Verschlüsselungsergebnis aber nicht als Chiffretext bzw. Zwischenergebnis bereitgestellt wird. Alternativ kann vorgesehen sein, dass der Verschlüsselungsalgorithmus gar nicht durchgeführt wird oder, falls ein oder mehrere echte Teil-Klartexte in einen gesamten Klartext eingebettet sind, der Verschlüsselungsalgorithmus zumindest auf diejenigen Klartext-Teile, die die Kollision bzw. Kollisionen verursachen, nicht angewandt wird.

Das Verhindern, dass das Verschlüsselungsergebnis als Chiffretext bzw. als Zwischenergebnis bereitgestellt wird, kann für beide Teil-Klartexte aus einem jeweiligen Paar von kollidierenden Teil-Klartexten durchgeführt werden. Allerdings reicht es in der Regel, wenn dies nur für einen der beiden Teil-Klartexte durchgeführt wird, da dann die beiden zugehörigen Chiffretexte bzw. Zwischenergebnisse in der Regel, abgesehen von seltenen Zufällen, bereits unterschiedlich sind. Für den anderen der beiden Teil-Klartexte aus dem Paar von kollidierenden Teil-Klartexten kann, gemäß dem "gewöhnlichen" Verschlüsselungsablauf, als Chiffretext bzw. als Zwischenergebnis das Verschlüsselungsergebnis bereitgestellt werden, das durch Anwendung des Verschlüsselungsalgorithmus mit dem Teil-Schlüssel und dem Teil-Klartext berechnet worden ist.

An Stelle des Verschlüsselungsergebnisses kann für mindestens einen Teil-Klartext aus dem kollidierenden Paar ein Alibitext als Chiffretext bzw. als Zwischenergebnis bereitgestellt wird.

Der Alibitext kann beispielsweise durch Anwenden des Verschlüsselungsalgorithmus auf den Klartext bzw. Teil-Klartext mit einem von dem Schüssel bzw. Teil-Schlüssel unterschiedlichen Alibi-Schlüssel bzw. Alibi-Teil-Schlüssel berechnet werden.

Alternativ kann der Alibitext durch Anwendung eines von dem Verschlüsselungsalgorithmus unterschiedlichen Alibi-Algorithmus auf den Klartext bzw. Teil-Klartext berechnet werden.

Alternativ kann für den Alibitext ein fester Wert oder ein zufälliger Wert, der beispielsweise durch einen Zufallszahlengenerator erzeugt ist, vorgegeben werden.

Falls ein Alibitext bereitgestellt wird, wird dies vorzugsweise derart durchgeführt, dass es für einen Angreifer nach außen, insbesondere beim Warten auf den Chiffretext bzw. das Zwischenergebnis, nicht erkennbar ist. Dazu unterscheidet sich der äußerlich wahrnehmbare Verfahrensablauf mit Bereitstellen eines Alibitextes nach einer der oben beschriebenen Varianten vorzugsweise nicht oder nur unwesentlich von dem Verfahrensablauf ohne das Bereitstellen eines Alibitextes. Dies wird dadurch erreicht, dass der Alibitext erst nach Ablauf eines geeignet bemessenen vorbestimmten Alibi-Zeitintervalls bereitgestellt wird. Weiter vorzugsweise ist das Alibi-Zeitintervall, insbesondere seiner Dauer und seiner zeitlichen Position nach, so gestaltet ist, dass das Bereitstellen des Alibitextes im wesentlichen gleich lang dauert wie das Anwenden und zumindest teilweise Ablaufen des Verschlüsselungsalgorithmus, dessen Verschlüsselungsergebnis auf Grundlage der Überprüfung durch das Bereitstellen des Alibitextes ersetzt ist. Dadurch wird erreicht, dass der Chiffretext bzw. das Zwischenergebnis zur erwarteten Zeit ausgegeben wird, unabhängig davon, ob dabei das Verschlüsselungsergebnis oder der Alibitext verwendet wird.

Weiter vorzugsweise wird, falls ein Alibitext als Chiffretext bzw. Zwischenergebnis bereitgestellt wird, der Verschlüsselungsalgorithmus trotzdem durchgeführt. Weiter vorzugsweise wird dabei mit einem falschen Schlüssel ein falscher Chiffretext bzw. ein falsches Zwischenergebnis berechnet. Dadurch wird erreicht, dass auch der Stromverbrauch, der beim Durchführen des Verschlüsselungsalgorithmus auftritt, durch das Bereitstellen des Alibitextes keine oder keine wesentliche Veränderung erfährt. Dadurch ist verhindert, dass ein Angriff auf den Verschlüsselungsalgorithmus, bei dem aus dem Stromverbrauch beim Ablaufen des Verschlüsselungsalgorithmus Information über den Schlüssel gewonnen werden soll, erfolgreich durchgeführt werden kann. Denn ein solcher Angriff kann nur dann Erfolg haben, wenn der Stromverbrauch sich signifikant ändert.

Der Verschlüsselungsalgorithmus läuft bei der bevorzugten Ausgestaltung, bei der mit einem falschen Schlüssel gerechnet wird, vorzugsweise innerhalb des Alibi-Zeitintervalls ab und ist, da der Ablauf in der Regel gleich lang dauert wie der reguläre Ablauf mit dem richtigen Schlüssel, in der Regel ungefähr am Ende des Alibi-Zeitintervalls bis zum Chiffretext bzw. Zwischenergebnis durchgelaufen. Bei dieser Variante gilt vorzugsweise das Alibi-Zeitintervall als abgelaufen, wenn der Verschlüsselungsalgorithmus mit der vorgesehenen Berechnung mit dem Alibi-Schlüssel fertig ist, d.h. mit dem Alibi-Schlüssel das "falsche" Alibi-Verschlüsselungsergebnis erstellt hat, da die Berechnung mit dem Alibi-Schlüssel und mit dem richtigen Schlüssel i.d.R. in etwa gleich lang dauert. Dies hat den Vorteil, dass für die Bemessung und Einhaltung des Alibi-Zeitintervalls keine zusätzlichen Schalteinrichtungen erforderlich sind. Bei anderen Varianten kann zur Bemessung und Einhaltung des Alibi-Zeitintervalls ein geeigneter Zeitgeber, z.B. eine Takteinrichtung, vorgesehen sein.

Gemäß einer Ausgestaltungsvariante der Erfindung ist der Schlüssel in eine Mehrzahl von Teil-Schlüssel unterteilt und der Klartext in eine Mehrzahl von Teil-Klartexten unterteilt. Dabei wird aus einem Teil-Schlüssel und einem Teil-Klartext ein Teil-Zwischenergebnis berechnet, und die vorbestimmte Anzahl von Kollisionen tritt für einen vorbestimmten Teil-Schlüssel und für mindestens ein Paar von Teil-Klartexten auf. Beispielsweise tritt die vorbestimmte Anzahl von Kollisionen für ein zwei Byte langes Schlüsselbytepärchen in einem 16 Byte langen Schlüssel auf, und dies für zwei Byte lange Klartext-Pärchen in einem 16 Byte langen Klartext.

Gemäß einer ersten Ausgestaltung der zweiten Variante weist der Klartext mindestens einen Teil-Klartext auf und weist der Test-Klartext mindestens einen Teil-Test-Klartext auf. Dabei wird gemäß den vorbestimmten Übereinstimmungs-Kriterien in dem Fall Übereinstimmung festgestellt, wenn der Klartext und der Test-Klartext sich höchstens darin unterscheiden, dass der Teil-Klartext und der Teil-Test-Klartext voneinander unterschiedlich sind, und davon abgesehen miteinander übereinstimmen.

Insbesondere kann bei der zweiten Variante der Klartext eine innere Mehrzahl von Teil-Klartexten aufweisen und der Test-Klartext eine innere Mehrzahl von Teil-Test-Klartexten aufweisen. Dabei wird gemäß den vorbestimmten Übereinstimmungs-Kriterien in dem Fall Übereinstimmung festgestellt, wenn der Klartext und der Test-Klartext sich höchstens in einem Teil-Klartext bzw. Teil-Test-Klartext voneinander unterscheiden und ansonsten miteinander übereinstimmen.

Insbesondere kann dabei jeder Teil-Klartext und jeder Teil-Test-Klartext zwei Byte lang sein. In diesem Fall wird gemäß den vorbestimmten Übereinstimmungs-Kriterien in dem Fall Übereinstimmung festgestellt, wenn der Klartext und der Test-Klartext sich in höchstens zwei Byte voneinander unterscheiden.

Gemäß einer weiteren Ausgestaltung der zweiten Variante wird eine Mehrzahl von Überprüfungsschritten mit einer Mehrzahl von Test-Klartexten, durchgeführt.

Dadurch, dass mehrere Test-Klartexte verwendet werden und der Klartext mit ihnen verglichen wird, wird eine höhere Zuverlässigkeit des Verfahrens erzielt, da mehr Übereinstimmungen erkannt werden.

Bei der zweiten Variante kann der Zähler insbesondere genau dann inkrementiert werden, wenn für mindestens einen Teil der Überprüfungsschritte, genauer gesagt für eine Teil-Mehrzahl von der Mehrzahl von Überprüfungsschritten, Übereinstimmung gemäß den vorbestimmten Kriterien festgestellt wird. Beispielsweise also für fünf aus dreizehn Überprüfungsschritte. Alternativ kann der Zähler genau dann inkrementiert werden, wenn, für mindestens einen der vorhergehenden Überprüfungsschritte, Übereinstimmung gemäß den vorbestimmten Kriterien festgestellt wird.

Gemäß einer weiteren Ausgestaltung der zweiten Variante wird vor dem Überprüfungsschritt mindestens ein vorhergehender Rechenschritt mit dem Test-Klartext durchgeführt wird, wobei bei dem vorhergehenden Rechenschritt zumindest ein Teil des Verschlüsselungsalgorithmus auf den Test-Klartext oder zumindest einen Teil davon und den Schlüssel oder zumindest einen Teil davon angewendet wird. Hierdurch wird ein Test-Verschlüsselungsergebnis berechnet. Der Test-Klartext wird nach dem vorhergehenden Rechenschritt als Text-Klartext für den Überprüfungsschritt bereitgestellt. Mit anderen Worten kann der Text-Klartext, mit dem der Klartext verglichen wird, ein Klartext aus einem vorhergehenden Rechenschritt sein, der nach dem Rechenschritt abgespeichert wird. Vor dem nächsten Rechenschritt wird überprüft, ob der Klartext, der nun zur Verschlüsselung eintrifft, Übereinstimmungen oder Ähnlichkeiten mit dem zuletzt eingetroffenen Klartext hat. Falls sich die beiden Klartexte nur wenig unterscheiden, ist davon auszugehen, dass gerade ein Angriff auf den Verschlüsselungsalgorithmus durchgeführt wird.

Gemäß einer weiteren Ausgestaltung der zweiten Variante wird nach dem Durchführen des Rechenschritts mit dem Klartext oder zumindest einem Teil davon der Klartext als weiterer Test-Klartext für nachfolgende weitere Überprüfungsschritte bereitgestellt. Mit anderen Worten wird der aktuell verschlüsselte Klartext nach der Verschlüsselung abgespeichert. Bei der nächsten Verschlüsselung wird geprüft, ob der hierfür neu eintreffende Klartext auffällige Übereinstimmungen oder Ähnlichkeiten mit dem zuletzt eingetroffenen Klartext hat. Wiederum ist, falls sich die beiden Klartexte nur wenig unterscheiden, davon auszugehen, dass gerade ein Angriff auf den Verschlüsselungsalgorithmus durchgeführt wird.

Gemäß einer weiteren Ausgestaltung der zweiten Variante wird durch den weiteren Test-Klartext ein auszusortierender Test-Klartext, der bereits für einen Überprüfungsschritt bereitgestanden ist und/oder dort verwendet worden ist, ersetzt, wobei der auszusortierende Test-Klartext in einem nachfolgenden Überprüfungsschritt nicht als Test-Klartext zur Durchführung des Überprüfungsschritts bereitgehalten wird. Das heißt, der gerade verschlüsselte Klartext wird nach der Verschlüsselung als Test-Klartext aufgenommen, und dafür wird ein anderer Test-Klartext verdrängt.

Gemäß einer weiteren Ausgestaltung der zweiten Variante wird eine Mehrzahl von vorhergehenden Rechenschritten mit einer Mehrzahl von Test-Klartexten durchgeführt, bei denen jeweils zumindest ein Teil des Verschlüsselungsalgorithmus auf den Test-Klartext oder zumindest einen Teil davon und den Schlüssel oder zumindest einen Teil davon angewendet wird, so dass eine Mehrzahl von Test-Verschlüsselungsergebnissen berechnet wird. Bei dieser Ausgestaltung wird jeder Test-Klartext nach einem jeweiligen vorhergehenden Rechenschritt in mindestens einem Überprüfungsschritt verwendet. Die Mehrzahl von vorhergehenden Rechenschritten werden bevorzugt nacheinander durchgeführt. Vorzugsweise wird nach jedem Rechenschritt wieder eine Überprüfungsschritt durchgeführt. Vorzugsweise wird nach jedem Rechenschritt der soeben verschlüsselte Klartext als Test-Klartext für ein oder mehrere nachfolgende Überprüfungsschritte bereitgestellt.

Weiter vorzugsweise wird für den neu aufgenommenen Test-Klartext jeweils ein alter Test-Klartext aussortiert. Vorzugsweise bleibt die Anzahl der direkt vor einem und für diesen Rechenschritt verwendeten Test-Klartexte konstant.

Insbesondere kann derjenige Test-Klartext aus der Mehrzahl von Test-Klartexten als auszusortierender Test-Klartext ersetzt werden, der in der Mehrzahl der Überprüfungsschritte insgesamt am häufigsten als Text-Klartext verwendet worden ist.

Alternativ kann derjenige Test-Klartext aus der Mehrzahl von Test-Klartexten als auszusortierender Test-Klartext ersetzt werden, der am frühesten als weiterer Test-Klartext bereitgestellt worden ist, insbesondere vom Klartext zum Test-Klartext gewandelt worden ist.

Gemäß einer Ausgestaltung der zweiten Variante ist der Höchst-Zählwert eins. Dabei kann als Zähler insbesondere eine Vergleichseinheit verwendet werden, mit der, falls die Übereinstimmung festgestellt wird, das Bereitstellen des Verschlüsselungsergebnisses als Chiffretext bzw. Zwischenergebnis verhindert wird.

Gemäß einer alternativen Ausgestaltung der zweiten Variante ist der Höchst-Zählwert zwölf.

Gemäß einer weitergehenden Ausgestaltung der zweiten Variante wird in dem Fall, wenn der Wert des Zählers den vorbestimmten Höchst-Zählwert erreicht oder überschreitet, an Stelle des Verschlüsselungsergebnisses ein Alibitext als Chiffretext bzw. als Zwischenergebnis bereitgestellt.

Dadurch fällt dem Angreifer, der erfindungsgemäß ertappt worden ist, nicht auf, dass dies geschehen ist, denn er hat in Antwort auf seinen zur Verschlüsselung eingegebenen Klartext einen Chiffretext bzw. ein Zwischenergebnis zurück bekommen.

Die folgenden Ausgestaltungen gelten sowohl für erste als auch für die zweite Variante des erfindungsgemäßen Verfahrens.

Der erfindungsgemäße Schlüssel kann insbesondere ein binär oder hexadezimal codierter Schlüssel sein.

Insbesondere kann, wie weiter oben erwähnt, erfindungsgemäß der Schlüssel in eine Mehrzahl von Teil-Schlüssel unterteilt sein und der Klartext in eine Mehrzahl von Teil-Klartexte unterteilt sein.

Insbesondere kann erfindungsgemäß jeder Teil-Schlüssel aus zwei Unter-Teil-Schlüsseln (z.B. Schlüsselbytes) gebildet sein und jeder Teil-Klartext aus zwei Unter-Teil-Klartexten (z.B. Plaintextbytes) gebildet sein. Dabei kann jeder Unter-Teil-Schlüssel und jeder Unter-Teil-Klartext jeweils ein Byte lang sein. In diesem Fall bildet jeder Teil-Schlüssel ein Schlüsselbyte-Pärchen von insgesamt zwei Byte Länge und jeder Teil-Klartext ein Klartextbyte-Pärchen von zwei Byte Länge.

Insbesondere kann erfindungsgemäß der Verschlüsselungsalgorithmus ein symmetrischer Verschlüsselungsalgorithmus sein. Insbesondere kann erfindungsgemäß der Verschlüsselungsalgorithmus eine Hash-Funktion mit Schlüssel (keyed hash function) sein.

Der Verschlüsselungsalgorithmus kann weiter acht Runden aufweisen Weiter kann erfindungsgemäß jede Runde des Verschlüsselungsalgorithmus fünf Subrunden (gleichbedeutend: Unterrunden) aufweisen. Mindestens eine Runde kann mindestens zwei Subrunden aufweisen. Weiter kann jede Runde fünf Subrunden aufweisen.

Bei der ersten Variante des erfindungsgemäßen Verfahrens treten die vorbestimmten Anzahlen bzw. Höchstzahlen von Kollisionen vorzugsweise nach der zweiten Subrunde auf, sind also sogenannte 2R-Kollisionen. Insbesondere wird beispielsweise der Schlüssel so gewählt, dass keine 2R-Kollisionen auftreten. Alternativ wird der Schlüssel so gewählt, dass höchstens eine 2R-Kollision auftritt, und dazu werden geeignete indizierte Klartexte gewählt, so dass die 2R-Kollisionen nach außen nicht erkennbar sind. Die Nichterkennbarkeit nach außen kann entweder nach derselben Subrunde auftreten oder nach einer nachfolgenden Subrunde. Bei Kollisionen, die nach der zweiten Subrunde auftreten, kann also beispielsweise bei einem Zwischenergebnis nach der zweiten, dritten, vierten oder fünften Subrunde oder beim Endergebnis, d.h. beim fertigen Chiffretext, die Nichterkennbarkeit der Kollisionen nach außen hergestellt sein.

Alternativ kann der Schlüssel so gewählt sein, dass er in einer höheren Subrunde (z.B. dritte Runde) keine Kollisionen hat und eventuelle Kollisionen in niederen Runden (z.B. erste und zweite Runde) durch indizierte Klartexte abgefangen werden.

Gemäß einer bevorzugten Ausgestaltung der Erfindung, sowohl für die erste als auch für die zweite Variante, ist der Verschlüsselungsalgorithmus der COMP 128-1 Algorithmus, der acht Runden mit je fünf Subrunden (Unterrunden) hat. Der COMP 128-1 Algorithmus wird insbesondere als Authentifizierungsalgorithmus für Mobilfunkanwendungen nach dem GSM-Standard verwendet und ist dazu vorzugsweise in der SIM-Karte implementiert.

Das erfindungsgemäße Verfahren wird vorzugsweise zur Abwehr eines Angriffs verwendet, der auf die Ermittlung des Schlüssels oder eines Teils davon durch wiederholte Durchführung des Verschlüsselungsalgorithmus gerichtet ist. Bei einem solchen Angriff wird der Verschlüsselungsalgorithmus wiederholt durchgeführt, vorzugsweise mit unterschiedlichen Klartexten. Dadurch, dass die Eingangsdaten bewertet werden und die Anwendung des Verschlüsselungsalgorithmus auf den Schlüssel und den Klartext zur Berechnung des Chiffretextes (oder eines Zwischenergebnisses auf dem Rechenweg zum Chiffretext) entsprechend der Bewertung durchgeführt wird, werden kritische Eingangsdaten abgefangen und gesondert, nämlich entsprechend der Bewertung behandelt.

Dabei wird entweder im Vorfeld verhindert, dass kritische Kombinationen von Eingangsdaten überhaupt auftreten, beispielsweise indem ein Schlüssel ohne Kollisionen gewählt wird.

Alternativ wird, falls ein Angreifer doch kritische Kombinationen von Eingangsdaten eingibt, verhindert, dass der Angreifer erfährt, dass die Eingangsdaten, die er eingegeben hat, kritisch sind.

In beiden Fällen wird dem Angreifer Information vorenthalten, aus der er den Schlüssel ermitteln könnte. Damit wird mit der Verwendung ein Angriff, der auf die Ermittlung des Schlüssels oder eines Teils davon durch wiederholte Durchführung des Verschlüsselungsalgorithmus gerichtet ist, erfolgreich abgewehrt.

Die Abwehr des Angriffs kann dadurch unterstützt sein, dass zusätzlich die Anzahl der wiederholten Durchführungen des Algorithmus gezählt wird und ab Erreichen einer vorbestimmten Höchstzahl von Durchführungen der Verschlüsselungsalgorithmus für weitere Durchführungen zumindest bis zum Ablauf eines vorbestimmten Wartezeitraums gesperrt wird. Dabei kann insbesondere das Sperren nur dann durchgeführt wird, wenn die vorbestimmte Höchstzahl von Durchführungen innerhalb eines vorbestimmten Zeitintervalls auftritt.

Die vorbestimmte Höchstzahl von Durchführungen liegt vorzugsweise im Bereich von 20000 bis 200000, weiter vorzugsweise bei ungefähr 65535, also 2¹⁶ abzüglich eins.

Ein erfindungsgemäßer Datenträger, in den das erfindungsgemäße Verfahren oder die erfindungsgemäße Verwendung implementiert ist, weist vorzugsweise eine Schlüssel-Speichereinrichtung auf, in der der Schlüssel abgespeichert ist. Bei der ersten Variante des Verfahrens ist dies der gezielt ausgewählte Schlüssel mit den vorbestimmten Anzahlen von Kollisionen. Weiter vorzugsweise ist bei dem erfindungsgemäßen Datenträger in der Schlüssel-Speichereinrichtung zusätzlich ein Alibi-Schlüssel abgespeichert, der erfindungsgemäß als Alibi-Schlüssel verwendet werden kann.

Optional, vorzugsweise bei einem Schlüssel mit mindestens einer Kollision, weist der erfindungsgemäße Datenträger eine Klartext-Speichereinrichtung auf, in der, zu dem Schlüssel, für mindestens ein Paar von kollidierenden Klartexten oder Teil-Klartexten mindestens einer der beiden Klartexte bzw. Teil-Klartexte des Paares abgespeichert ist. Vorzugsweise ist dabei für jedes Paar von kollidierenden Klartexten einer der beiden Klartexte aus dem jeweiligen Paar von kollidierenden Klartexten abgespeichert. Alternativ können beide Klartexte abgespeichert sein.

Optional, vorzugsweise falls in dem Datenträger ein Verfahren gemäß der zweiten Variante des erfindungsgemäßen Verfahrens implementiert ist, weist der Datenträger weiter eine Test-Klartext-Speichereinrichtung auf, in der mindestens ein Test-Klartext oder mindestens ein Test-Teil-Klartext abgespeichert ist. Dabei kann die Test-Klartext-Speichereinrichtung beispielsweise einen Speicher aufweisen, der nach dem FIFO ("first-in-first-out") Prinzip funktioniert. In diesem Fall wird bei dem erfindungsgemäßen Verfahren gemäß der zweiten Variante vorzugsweise ein gerade im Rechenschritt bearbeiteter Klartext als weiterer Test-Klartext in die Speichereinrichtung aufgenommen. Dafür wird der als erstes in den Speicher eingespeicherte Test-Klartext ("first-in-first-out") aus dem Speicher gelöscht. Die Anzahl Elemente im Speicher bleibt dabei konstant.

Vorzugsweise sind in dem Datenträger weiter die Funktionen einer Mobiltelefonkarte zumindest teilweise implementiert. In diesem Fall ist der Datenträger weiter vorzugsweise eine SIM-Karte, in der zusätzlich das erfindungsgemäße Verfahren, optional zusätzlich mit der erfindungsgemäßen Verwendung, implementiert ist.

Bei dem erfindungsgemäßen Datenträger wird vorzugsweise bei seiner Personalisierung der Schlüssel in dem Datenträger abgespeichert. Dabei ist der Schlüssel derart ausgewählt, dass jeder seiner Teil-Schlüssel für jeden Teil-Klartext eine jeweilige vorbestimmte Anzahl von Kollisionen hat, wobei die Anzahlen für jeden Teil-Schlüssel aus einer vorbestimmten Menge möglicher Anzahlen von Kollisionen bestimmt sind.

Optional, insbesondere, falls mindestens ein Teil-Schlüssel mindestens eine Kollision hat, werden bei der Personalisierung des Datenträgers zusätzlich zu dem Schlüssel die zum Schlüssel gehörigen kollidierenden Klartexte oder Teil-Klartexte in dem Datenträger abgespeichert. Vorzugsweise wird aus jedem Paar von kollidierenden (Teil-)Klartexten nur ein (Teil-)Klartext abgespeichert, alternativ aber auch beide (Teil-)Klartexte.

Weiter kann bei der Personalisierung zusätzlich ein Alibi-Schlüssel in dem Datenträger derart eingerichtet abgespeichert werden, dass er mit dem Verschlüsselungsalgorithmus verwendet wird, wenn der richtige Schlüssel auf Grund der Überprüfung und Bewertung der Klartexte nicht verwendet wird, eben weil beispielsweise eine Kollision droht.

Im Folgenden wird die Erfindung an Hand von Ausführungsbeispielen an Hand des Verschlüsselungsalgorithmus Comp128-1 und unter Bezugnahme auf die Figuren näher erläutert. Es zeigen:
- Fig. 1: eine teilweise schematische Darstellung der ersten beiden Subrunden einer Runde des Comp128-1 Algorithmus;
- Fig. 2: eine Tabelle, in der gezeigt ist, wie viele Schlüsselbyte-Pärchen (rechte Spalte) aus insgesamt 65536 möglichen Schlüsselbyte-Pärchen eine vorbestimmte Anzahl n von Kollisionen am Ende der zweiten Sub- runde haben (linke Spalte);
- Fig. 3: eine Tabelle mit allen Schlüsselbyte-Pärchen (KA1,KA2) eines 16 Byte langen Schlüssels Ki mit einem bestimmten Wert und die zugehörigen kollidierenden Paaren von Klartext-Byte-Pärchen (CA1₁,CA2₁) und (CA1₂,CA2₂) mit höchstens einer Kollision; von den beiden Klartext- Byte-Pärchen (CA1₁,CA2₁) und (CA1₂,CA2₂) wird dabei eines zufällig ausgewählt und auf die Karte geschrieben, in diesem Beispiel sind das die fettgedruckten Klartext-Byte-Pärchen;
- Fig. 4a, 4b: eine Veranschaulichung der Überprüfung von fünf unterschiedli- chen Klartexten challenge 1, challenge 2, challenge 3, challenge 4, challenge 5 auf Kollisionen ihrer Teil-Klartexte (Klartext-Byte- Pärchen) mit dem Schlüssel Ki aus Fig. 3.

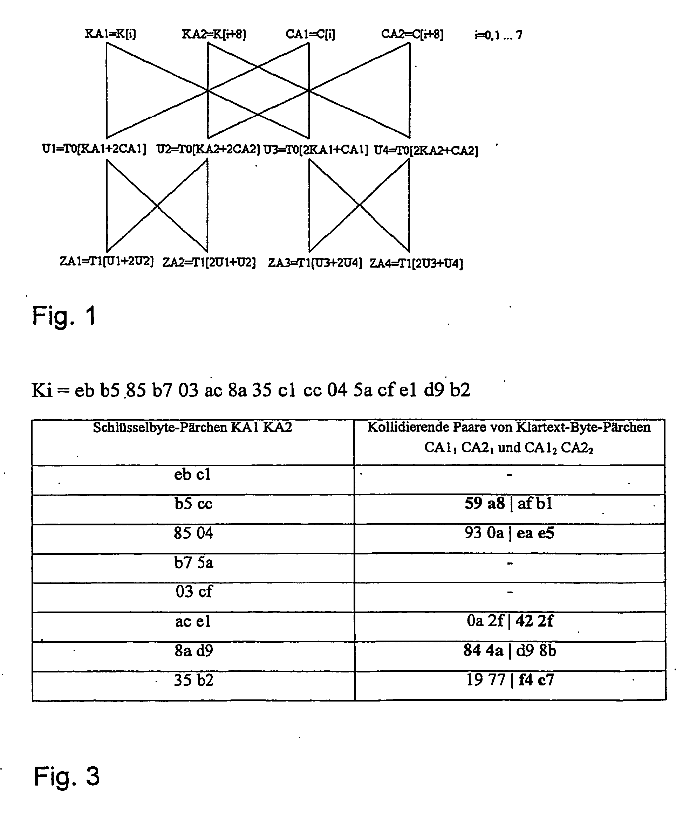

Fig. 1 zeigt eine teilweise schematische Darstellung der ersten beiden Subrunden einer Subrunde des Comp128-1 Algorithmus. In den Algorithmus wird aus einem sechzehn Byte langen Schlüssel Ki mit sechzehn Schlüsselbytes K[0], K[1],...,K[15] und einem sechzehn Byte langen Klartext C ("challenge") mit sechzehn Klartext-Bytes C[0], C[1],...,C[15] ein zwölf Byte langer Hash-Wert berechnet.

In der ersten Subrunde wird für i=0...7 jeweils das i-te Schlüsselbyte K[i] mit dem i-ten Klartextbyte C[i] verrechnet und das (i+8)-te Schlüsselbyte K[i+8] mit dem (i+8)-ten Klartextbyte C[i+8] verrechnet, so dass für jedes i von 0 bis 7 jeweils vier Ergebnisse der ersten Subrunde U1, U2, U3 und U4 berechnet werden. Aus U1 und U2 wird ein erstes Ergebnis Z1 der zweiten Subrunde und ein zweites Ergebnis Z2 der zweiten Subrunde berechnet. Aus U3 und U4 wird ein drittes Ergebnis Z3 der zweiten Subrunde und ein viertes Ergebnis Z4 der zweiten Subrunde berechnet. Für i=0 hängen die Ergebnisse Z1, Z2, Z3 und Z4 der zweiten Subrunde nur von dem Schlüsselbyte-Pärchen (KA1,KA2) mit den beiden Schlüsselbytes K[0] und K[8] und von dem Klartext-Byte-Pärchen (CA1,CA2) mit den beiden Klartext-Bytes C[0] und C[8] ab, nicht jedoch von anderen Schlüsselbytes und Klartext-Bytes. Die Ergebnisse Z1, Z2, Z3 und Z4 der zweiten Subrunde hängen somit nur von jeweils zwei Schlüsselbytes und zwei Klartext-Bytes ab.

Die erste Subrunde des Comp128-1 ist so gestaltet, dass keine Kollisionen auftreten. Bei den nachfolgenden Subrunden können hingegen Kollisionen auftreten. Kollisionen nach der n-ten Subrunde werden dabei auch als nR-Kollisionen bezeichnet. Falls nach der zweiten Subrunde, bei den 2R-Ergebnissen Z1, Z2, Z3 und Z4, Kollisionen, d.h. 2R-Kollisionen, zwischen den Klartext-Bytes K[0] und K[8] auftreten, d.h. falls es zwei unterschiedliche Werte des Klartext-Byte-Pärchens (CA1,CA2) = (C[0],C[8]), nämlich (CA1₁,CA2₁) und (CA1₂,CA2₂), gibt, die die gleichen 2R-Ergebnisse Z1, Z2, Z3, Z4 liefern, lassen sich daraus die beiden Schlüsselbytes K[0] und K[8] des zugehörigen Schlüsselbyte-Pärchens (KA1,KA2) = (K[0],K[8]) ermitteln, da die Ergebnisse Z1, Z2, Z3 und Z4 nur von diesen beiden Schlüsselbytes abhängen. Dazu werden für das Klartext-Byte-Pärchen (CA1,CA2) = (C[0],C[8]) die ersten beiden Subrunden des Algorithmus mit allen möglichen Schlüsselbyte-Pärchen (KA1,KA2) = (K[0],K[8]) durchgerechnet und dadurch für jedes mögliche Schlüsselbyte-Pärchen (KA1,KA2)= (K[0],K[8]) ein 2R-Ergebnis berechnet. Die Anzahl möglicher Schlüsselbyte-Pärchen ist 2¹⁶, also 65536. Daher werden 65536 einzelne 2R-Ergebnisse für jedes Klartext-Byte-Pärchen berechnet, die auf Kollisionen in Z1, Z2, Z3, Z4 untersucht werden. Das Schlüsselbyte-Pärchen, für das das 2R-Ergebnis mit dem kollidierenden 2R-Ergebnis übereinstimmt, ist das gesuchte Schlüsselbyte-Pärchen, das die Kollision verursacht hat. Ausgehend von dem auf diese Weise ermittelten Schlüsselbyte-Pärchen lassen sich auch die übrigen 14 Schlüsselbytes des 16-Byte-Schlüssels ermitteln.

Werden nun also gemäß einer Ausgestaltung der ersten Variante der Erfindung Schlüssel, die Kollisionen haben, von der Verwendung ausgeschlossen, so lässt sich der Schlüssel auf dem Weg über 2R-Kollisionen nicht ermitteln.

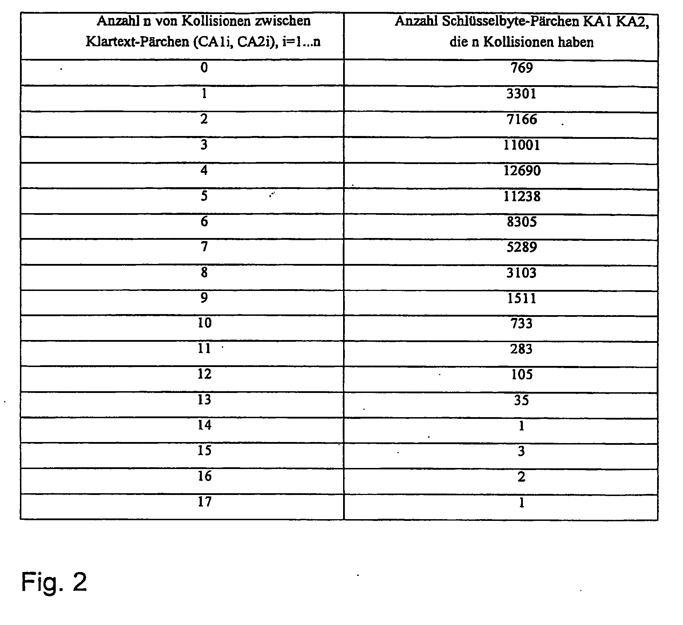

Allerdings ist hierdurch der Schlüsselraum aller verfügbarer Schlüssel stark eingeschränkt, nämlich für jedes Schlüsselbyte-Pärchen (KA1,KA2) = (K[i],K[i+8]) auf 769 von insgesamt 65536 möglichen Schlüsselbyte-Pärchen, wie aus Fig. 2 ersichtlich ist. Der gesamte Schlüsselraum ist dadurch von 2¹²⁸ auf 2^{76.7} reduziert

Fig. 2 zeigt eine Tabelle, in der gezeigt ist, wie viele Schlüsselbyte-Pärchen (rechte Spalte) aus den insgesamt 65536 möglichen Schlüsselbyte-Pärchen eine vorbestimmte Anzahl n von Kollisionen haben (linke Spalte). Die Tabelle wurde durch Durchrechnen aller möglichen Klartext-Byte-Pärchen (CA1,CA2) mit allen möglichen Schlüsselbyte-Pärchen (KA1,KA2) erstellt. Die Tabelle zeigt, dass von den 65536 möglichen Schlüsselbyte-Pärchen eine Anzahl von 769 Schlüsselbyte-Pärchen keine Kollision hat. Die Tabelle zeigt weiter, dass von den 65536 möglichen Schlüsselbyte-Pärchen eine Anzahl von 3301 Schlüsselbyte-Pärchen genau eine Kollision hat, d.h. es gibt genau ein Paar von kollidierenden Schlüsselbyte-Pärchen, nämlich (CA1₁,CA2₁) und (CA1₂,CA2₂), die in der zweiten Runde das gleiche Ergebnis liefern. 7166 Schlüsselbyte-Pärchen haben genau zwei Kollisionen, d.h. es gibt zwei Paare von kollidierenden Schlüsselbyte-Pärchen, nämlich das erste Paar [(CA1₁,CA2₁)₁, (CA1₂,CA2₂)₁] und das zweite Paar [(CA1₁,CA2₁)₂, (CA1₂,CA2₂)₂]. 11001 Schlüsselbyte-Pärchen haben genau drei Kollisionen, d.h. es gibt zusätzlich noch ein drittes kollidierendes Paar [(CA1₁,CA2₁)₃, (CA1₂,CA2₂)₃], etc.. Werden daher für die Teil-Schlüssel des Schlüssels, d.h. für die einzelnen Schlüsselbyte-Pärchen (KA1,KA2) = (K[i],K[i+8]), i=0...7 nicht Null, sondern höchstens drei Kollisionen zugelassen, so enthält der Schlüsselraum für jedes Schlüsselbyte-Pärchen bereits 22237 zulässige Schlüsselbyte-Pärchen, also fast dreißigmal so viele wie bei einer zulässigen Anzahl von Kollisionen von genau Null. Für höchstens eine zulässige Kollision gibt es immer noch 4070 zulässige Schlüsselbyte-Pärchen und damit einen gesamten Schlüsselraum von 2^{95.9} Schlüsseln.

Fig. 3 zeigt eine Tabelle mit allen Schlüsselbyte-Pärchen (KA1,KA2) eines 16 Byte langen GSM-Authentisierungsschlüssels Ki mit einem bestimmten Wert und die zugehörigen kollidierenden Paare von Klartext-Byte-Pärchen (CA1₁,CA2₁) und (CA1₂,CA2₂) mit höchstens einer Kollision. Der Schlüssel Ki hat in dem gezeigten Beispiel den Wert eb b5 85 b7 03 ac, 8a 35 c1 cc 04 5a cf e1 d9 b2 und ist in einer SIM-Karte für ein Mobiltelefon abgespeichert. Der Schlüssel ist so gewählt, dass seine Teil-Schlüssel höchstens eine Kollision haben. Die linke Spalte der Tabelle zeigt die Schlüsselbyte-Pärchen (KA1,KA2) = (K[i],K[i+8]), i=0...7. Die rechte Spalte der Tabelle zeigt die zugehörigen Paare von kollidierenden Klartext-Byte-Pärchen. Das heißt, in dem in der Tabelle dargestellten Beispiel haben drei der acht Schlüsselbyte-Pärchen (Teil-Schlüssel) keine Kollision. Für diese Schlüsselbyte-Pärchen sind keine Klartext-Byte-Pärchen aufgelistet. Fünf der acht Schlüsselbyte-Pärchen (Teil-Schlüssel) haben genau eine Kollision. Für diese Schlüsselbyte-Pärchen enthält die rechte Spalte genau ein Paar von kollidierenden Klartext-Byte-Pärchen. Beispielsweise verursacht das Paar (59 a8 / af b1) mit dem ersten Klartext-Pärchen (Teil-Klartext) (CA1₁,CA2₁) = (59 a8) und dem zweiten Klartext-Pärchen (Teil-Klartext) (CA1₂,CA2₂) = (af b1) mit dem Schlüsselbyte-Pärchen (Teil-Schlüssel) (KA1,KA2) = (b5 cc) genau eine Kollision.

Bei der Personalisierung der SIM-Karte wird die Tabelle (oder ein Teil davon) mit den in der linken Spalte aufgelisteten Schlüsselbyte-Pärchen (KA1,KA2) und den in der rechten Spalte aufgelisteten zugehörigen Paaren von Klartext-Byte-Pärchen (CAl₁,CA2₁), (CA1₂,CA2₂) in der SIM-Karte abgespeichert. Bevorzugt wird allerdings aus der rechten Spalte von jedem Paar von kollidierenden Klartext-Byte-Pärchen (CAl₁,CA2₁) (CA1₂,CA2₂) nur eines der beiden Klartext-Byte-Pärchen bei der Personalisierung der SIM-Karte in der SIM-Karte abgespeichert, da dies für das Funktionieren des Verfahrens ausreicht und zudem Speicher spart. Vorzugsweise wird das abzuspeichernde von den beiden Klartext-Byte-Pärchen (CA1₁,CA2₁) und (CA1₂,CA2₂) zufällig ausgewählt und dann auf die Karte geschrieben. In der Tabelle aus Fig.3 ist das jeweilige bei der Personalisierung auf die Karte gespeicherte Klartext-Byte-Pärchen fettgedruckt.

Wäre bei dem Beispiel aus Fig. 3 der Schlüssel Ki so gewählt, dass seine Teil-Schlüssel höchstens n Kollisionen haben, so gäbe es in der rechten Spalte der Tabelle aus Fig. 3 Zeilen mit bis zu n Paaren von Klartext-Byte-Pärchen (CA1₁,CA2₁), (CA1₂,CA2₂), .... (CA1ₙ,CA2ₙ).

Für entsprechende Abwandlungen des Beispiels aus Fig. 3, bei denen der Schlüssel Ki so gewählt ist, dass seine Teil-Schlüssel höchstens n Kollisionen haben, enthalten somit die Zeilen der zu Fig. 3 analogen Tabelle zu einem einzelnen Teil-Schlüssel in der linken Spalte bis zu n Paare von Klartext-Byte-Pärchen (CA1₁,CA2₁), (CA1₂,CA2₂), .... (CA1ₙ,CA2ₙ) in der rechten Spalte.

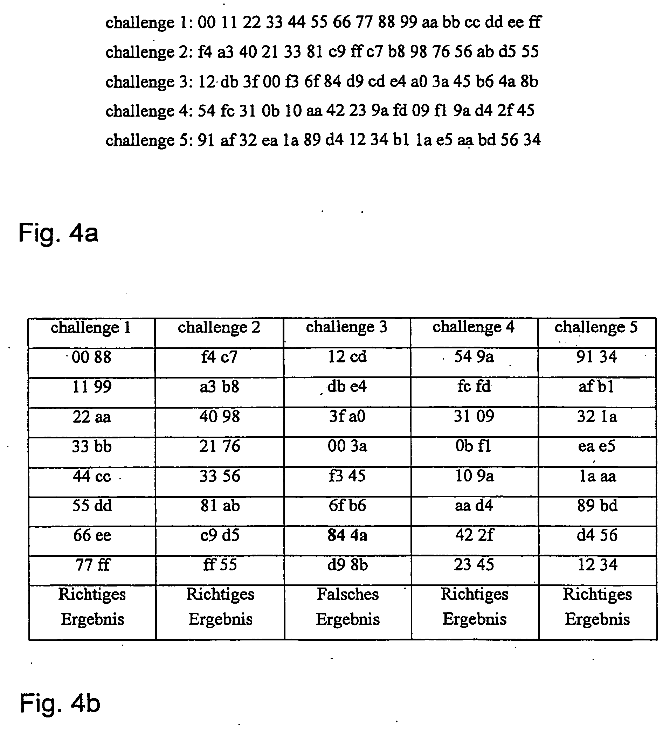

Wird nun in die mit dem Schlüssel Ki, der den Wert aus dem Beispiel aus Fig. 3 hat, personalisierte SIM-Karte ein Klartext eingegeben, so wird überprüft, ob der Klartext an den einzelnen Byte-Pärchen-Positionen (CA1,CA2) jeweils einen Wert hat, der gleich einem Klartext-Byte-Pärchen aus einem kollidierenden Paar von Klartext-Byte-Pärchen ist. Die Überprüfung des Klartextes auf kollidierende Paare von Klartext-Byte-Pärchen ist in Fig. 4a und 4b veranschaulicht

Fig. 4a, 4b zeigen eine Veranschaulichung der Überprüfung von fünf unterschiedlichen Klartexten challenge 1, challenge 2, challenge 3, challenge 4, challenge 5 auf Kollisionen ihrer Teil-Klartexte (Klartext-Byte-Pärchen) mit dem Schlüssel Ki aus Fig. 3.

Fig. 4a zeigt die Werte der fünf verwendeten Klartexte challenge 1, challenge 2, challenge 3, challenge 4, challenge 5.

Fig. 4b zeigt die Werte der fünf Klartexte challenge i, i=1,2,3,4,5 aus Fig. 4a aufgeteilt in Klartext-Byte-Pärchen (Teil-Klartexte). Für jeden Klartext wird jeweils jedes Klartext-Byte-Pärchen daraufhin überprüft, ob es zu einem kollidierenden Paar von Klartext-Byte-Pärchen gehört. Für die Überprüfung wird die Tabelle aus Fig. 3 verwendet. Wenn für einen Klartext challenge i das keines überprüften Klartext-Byte-Pärchen zu einem kollidierenden Paar von Klartext-Byte-Pärchen gemäß der Tabelle aus Fig. 3 gehört, wird der Authentisierungsalgorithmus Comp128-1 mit dem korrekten Schlüssel Ki aus Fig. 3 durchgeführt. Dies ist für die Klartexte challenge 1, 2, 4 und 5 der Fall. Für den Klartext challenge 3 ist hingegen das Klartext-Byte-Pärchen (84 4a), das an der Position (K[6],K[14]) steht, gleich dem Klartext-Byte-Pärchen (CA1₁,CA2₁) = (84 4a), das mit den beiden Schlüssel-Bytes (K[6],K[14]) = (8a d9) des Schlüssels Ki eine Kollision erzeugt (vorletzte Zeile der Tabelle aus Fig. 3). Daher wird für den Klartext challenge 3 der Authentisierungsalgorithmus Comp128-1 nicht mit dem korrekten Schlüssel Ki aus Fig. 3, sondern mit einem Alibi-Schlüssel durchgeführt, der ebenfalls bei der Personalisierung in der SIM-Karte abgespeichert worden ist. Somit wird für den Klartext challenge 3 ein falscher Chiffretext berechnet. Daher sind die Chiffretexte, die auf Grund der Kollision eigentlich identisch wären, durch die Verwendung des Alibi-Schlüssels unterschiedlich, weshalb die Kollision nach außen hin nicht erkennbar ist. Da außerdem der Authentisierungsalgorithmus, abgesehen davon, dass ein falscher Schlüssel verwendet wird, regulär durchgeführt wird, lässt sich weder aus dem Stromverbrauch noch aus dem Zeitverhalten der SIM-Karte erkennen, dass ein kollidierender Klartext verarbeitet worden ist. Daher kann ein Angreifer auch aus den Strom- und Zeitkurven beim Abarbeiten des Algorithmus keine Rückschlüsse auf den Schlüssel aus Kollisionen ziehen, obwohl Kollisionen auftreten.

Das erfindungsgemäße Verfahren und die erfindungsgemäße Verwendung kann auch mit beliebigen anderen Verschlüsselungsalgorithmen verwendet werden. Insbesondere kann jeder beliebige Verschlüsselungsalgorithmus mit mindestens zwei Subrunden verwendet werden, insbesondere eine solcher Verschlüsselungsalgorithmus, bei dem als Ergebnis einer vorbestimmten Subrunde von den mindestens zwei Subrunden das Zwischenergebnis berechnet wird, so dass die vorbestimmten Anzahlen von Kollisionen nach der vorbestimmten Subrunde auftreten. Insbesondere kann ein beliebiger Verschlüsselungsalgorithmus verwendet werden, bei dem die vorbestimmten Anzahlen von Kollisionen nach der zweiten Subrunde auftreten.

Für jede beliebige Ausführungsform des erfindungsgemäßen Datenträgers sei hier festgestellt, dass eine Implementierung, wie sie in diesem Dokument verstanden ist, eine Implementierung in Softwareform, in Hardwareform oder in gemischter Hard- und Softwareform sein kann.

## Patentansprüche

1. Verfahren zur Erhöhung der Sicherheit gegen Ermitteln des Schlüssels bei einem Verschlüsselungsverfahren, bei welchem Verschlüsselungsverfahren durch die Anwendung eines Verschlüsselungsalgorithmus auf Eingangsdaten, nämlich einen Klartext und einen Schlüssel, ein Chiffretext berechnet wird, **dadurch gekennzeichnet, daβ**
zumindest der Klartext, einer Überprüfung gemäß vorbestimmten Kriterien unterzogen wird und/oder vorab unterzogen worden ist,
auf Grundlage der Überprüfung zumindest dem Klartext eine Bewertung zugewiesen wird, und
eine Anwendung des Verschlüsselungsalgorithmus auf den Schlüssel und den Klartext zur Berechnung des Chiffretextes oder eines Zwischenergebnisses auf dem Rechenweg zum Chiffretext entsprechend der Bewertung durchgeführt wird.

2. Verfahren nach Anspruch 1, **dadurch gekennzeichnet, dass** in der Bewertung enthalten ist, dass sich aus den Eingangsdaten Information in Bezug auf einen Angriff auf den Verschlüsselungsalgorithmus, der auf ein Ermitteln des Schlüssels abzielt, gewinnen lässt.

3. Verfahren nach Anspruch 1 oder 2, **dadurch gekennzeichnet, dass** in der Bewertung enthalten ist, dass sich aus den Eingangsdaten Information in Bezug auf einen künftigen Angriff auf den Verschlüsselungsalgorithmus gewinnen lässt.

4. Verfahren nach einem der Ansprüche 1 bis 3, **dadurch gekennzeichnet, dass** die Bewertung besagt, dass Kollisionen auftreten, wobei das Auftreten einer Kollision darin besteht, dass zwei unterschiedliche Klartexte bei ihrer
Verschlüsselung mit dem gleichen Schlüssel und dem
gleichen Verschlüsse.
lungsalgorithmus übereinstimmende Chiffretexte oder übereinstimmende Zwischenergebnisse an einer beliebigen bestimmten Stelle auf dem Rechenweg vom Klartext zum Chiffretext liefern.

5. Verfahren nach Anspruch 4, **dadurch gekennzeichnet, dass** die Anwendung des Verschlüsselungsalgorithmus gemäß der Bewertung umfasst, dass dabei Schlüssel mit Kollisionen und/oder Paare von zu solchen Schlüsseln gehörigen kollidierenden Klartexten berücksichtigt werden.

6. Verfahren nach einem der Ansprüche 1 bis 5, **dadurch gekennzeichnet, dass** in der Bewertung enthalten ist, dass die Eingangsdaten Information über einen während des Ablaufs des Verfahrens bereits erfolgenden Angriff auf den Verschlüsselungsalgorithmus enthalten.

7. Verfahren nach Anspruch 6, **dadurch gekennzeichnet, dass** die Information Klartext-Übereinstimmungen aufweist, die darin bestehen, dass der Klartext zumindest teilweise mit vorherigen Klartexten übereinstimmt, die bei vorhergehenden Durchführungen des Verschlüsselungsalgorithmus in den bereitgestellt wurden Verschlüsselungsalgorithmus eingegeben worden sind.

8. Verfahren nach Anspruch 6 oder 7, **dadurch gekennzeichnet, dass** für die Überprüfung Test-Eingangsdaten verwendet werden und dass die bei dem Verfahren verwendeten Eingangsdaten nach der Durchführung des Verfahrens für nachfolgende weitere Durchführungen des Verfahrens als neue Test-Eingangsdaten für die Überprüfung bereitgestellt werden.

9. Verfahren nach Anspruch 8, **dadurch gekennzeichnet, dass** durch die neuen Eingangsdaten auszusortierende Test-Eingangsdaten, die bereits für eine Überprüfung bereitgestellt wurden und/oder dort verwendet worden sind, ersetzt werden, wobei die auszusortierenden Test-Eingangsdaten bei einer nachfolgenden Überprüfung nicht als Test-Eingangsdaten zur Durchführung der Überprüfung bereitgehalten werden.

10. Verfahren nach Anspruch 4 oder 5, **dadurch gekennzeichnet, dass** der Klartext mindestens einen Teil-Klartext aufweist und der Schlüssel mindestens einen Teil-Schlüssel aufweist, wobei bei dem Verfahren
- in einem Rechenschritt zumindest ein Teil des Verschlüsselungsalgorithmus auf zumindest einen Teil-Klartext des Klartexts und zumindest einen Teil-Schlüssel des Schlüssels angewendet wird, so dass ein Verschlüsselungsergebnis berechnet wird, das als der Chiffretext oder zumindest als ein Zwischenergebnis, aus dem sich der Chiffretext durch weitere Rechenschritte berechnen lässt, bereitgestellt wird, und
- der Schlüssel derart ausgewählt ist, dass jeder seiner Teil-Schlüssel für jeden Teil-Klartext eine jeweilige vorbestimmte Anzahl von Kollisionen hat, wobei die Anzahlen für jeden Teil-Schlüssel aus einer vorbestimmten Menge möglicher Anzahlen von Kollisionen bestimmt sind.

11. Verfahren nach Anspruch 10, **dadurch gekennzeichnet, dass** jeder der Teil-Schlüssel jeweils eine vorbestimmte Höchstzahl von Kollisionen hat, insbesondere höchstens eine Kollision hat.

12. Verfahren nach Anspruch 11, **dadurch gekennzeichnet, dass** die jeweilige vorbestimmte Höchstzahl von Kollisionen für alle Teil-Schlüssel gleich ist.

13. Verfahren nach Anspruch 11, **dadurch gekennzeichnet, dass** die Teil-Schlüssel keine Kollision haben.

14. Verfahren nach einem der Ansprüche 10 bis 13, **dadurch gekennzeichnet, dass** der Teil-Schlüssel der Schlüssel selbst ist.

15. Verfahren nach einem der Ansprüche 10 bis 14, **dadurch gekennzeichnet, dass** der Teil-Klartext der Klartext selbst ist.

16. Verfahren nach einem der Ansprüche 10 bis 12,14 und 15, **dadurch gekennzeichnet, dass** mindestens ein Teil-Schlüssel mindestens eine Kollision hat.

17. Verfahren nach Anspruch 16, **dadurch gekennzeichnet, dass** vor der Anwendung des Verschlüsselungsalgorithmus der Teil-Klartext daraufhin überprüft wird, ob er zu einem kollidierenden Paar von Teil-Klartexten gehört, für die mindestens ein Teil-Schlüssel mindestens eine Kollision hat, und wobei, falls die Überprüfung ergibt, dass der Teil-Klartext zu einem solchen kollidierenden Paar gehört, auf Grund der Überprüfung für mindestens einen der beiden Teil-Klartexte aus dem Paar von kollidierenden Teil-Klartexten verhindert wird, dass ein unter Verwendung des Verschlüsselungsalgorithmus mit dem Teil-Schlüssel und mit dem Teil-Klartext aus dem kollidierenden Paar gewonnenes Verschlüsselungsergebnis als Chiffretext bzw. Zwischenergebnis bereitgestellt wird.

18. Verfahren nach Anspruch 17, **dadurch gekennzeichnet, dass** auf Grund der Überprüfung für mindestens einen der beiden Teil-Klartexte aus dem Paar von kollidierenden Teil-Klartexten der Verschlüsselungsalgorithmus mit dem Teil-Schlüssel auf diesen einen Teil-Klartext nicht angewandt wird.

19. Verfahren nach Anspruch 17 oder 18, **dadurch gekennzeichnet, dass** für mindestens einen Teil-Klartext aus dem kollidierenden Paar an Stelle des Verschlüsselungsergebnisses ein Alibitext als Chiffretext bzw. als Zwischenergebnis bereitgestellt wird.

20. Verfahren nach einem der Ansprüche 17 bis 19, **dadurch gekennzeichnet, dass** das Verhindern des Bereitstellens des Verschlüsselungsergebnisses nur für einen der beiden Teil-Klartexte aus dem Paar von kollidierenden Teil-Klartexten durchgeführt wird, und wobei für den anderen der beiden Teil-Klartexte aus dem Paar von kollidierenden Teil-Klartexten das durch Anwendung des Verschlüsselungsalgorithmus mit dem Teil-Schlüssel und dem Teil-Klartext berechnete Verschlüsselungsergebnis als der Chiffretext bzw. als das Zwischenergebnis bereitgestellt wird.

21. Verfahren nach einem der Ansprüche 17 bis 20, **dadurch gekennzeichnet, dass** mit dem Überprüfen des jeweiligen Teil-Klartextes, ob er zu einem kollidierenden Paar von Teil-Klartexten gehört, der gesamte Klartext, von dem der Teil-Klartext mindestens einen Teil bildet, überprüft wird, ob er zu einem Paar von kollidierenden Klartexten gehört.

22. Verfahren nach einem der Ansprüche 17 bis 21, **dadurch gekennzeichnet, dass** vor dem Überprüfen mindestens ein Teil der kollidierenden Paare von Teil-Klartexten und/ oder jeweils mindestens ein Teil jedes solchen Paares aus einem Speicher ausgelesen werden.

23. Verfahren nach einem der Ansprüche 17 bis 21, **dadurch gekennzeichnet, dass** vor dem Überprüfen mindestens ein Teil der kollidierenden Paare von Klartexten und/oder jeweils mindestens ein Teil jedes solchen Paares aus einem Speicher ausgelesen werden.

24. Verfahren nach Anspruch 23, **dadurch gekennzeichnet, dass** die Paare von kollidierenden Teil-Klartexten gemeinsam mit den Klartexten, von denen die Teil-Klartexte jeweils mindestens einen Teil bilden, aus dem Speicher ausgelesen werden.

25. Verfahren nach Anspruch 24, **dadurch gekennzeichnet, dass** der Alibitext durch Anwenden des Verschlüsselungsalgorithmus auf den Klartext bzw. Teil-Klartext mit einem von dem Schlüssel bzw. Teil-Schlüssel unterschiedlichen Alibi-Schlüssel bzw. Alibi-Teil-Schlüssel berechnet wird.

26. Verfahren nach Anspruch 24, **dadurch gekennzeichnet, dass** der Alibitext durch Anwendung eines von dem Verschlüsselungsalgorithmus unterschiedlichen Alibi-Algorithmus auf den Klartext bzw. Teil-Klartext berechnet wird.

27. Verfahren nach Anspruch 24, **dadurch gekennzeichnet, dass** als der Alibitext ein zufälliger bereitgestellt Text wird.

28. Verfahren nach einem der Ansprüche 24 bis 27, **dadurch gekennzeichnet, dass** der Alibitext erst nach Ablauf eines vorbestimmten Alibi-Zeitintervalls bereitgestellt wird.

29. Verfahren nach Anspruch 28, **dadurch gekennzeichnet, dass** das Alibi-Zeitintervall, insbesondere seiner Dauer und seiner zeitlichen Position nach, so gestaltet ist, dass das Bereitstellen des Alibitextes im wesentlichen gleich lang dauert wie das Anwenden und zumindest teilweise Ablaufen des Verschlüsselungsalgorithmus, dessen Verschlüsselungsergebnis auf Grundlage der Überprüfung durch das Bereitstellen des Alibitextes ersetzt ist.

30. Verfahren nach einem der Ansprüche 10 bis 29, **dadurch gekennzeichnet, dass** die jeweiligen vorbestimmten Anzahlen von Kollisionen bei dem Zwischenergebnis auftritt.

31. Verfahren nach Anspruch 30, **dadurch gekennzeichnet, dass** der Verschlüsselungsalgorithmus mindestens zwei Subrunden aufweist, wobei als Ergebnis einer vorbestimmten Subrunde von den mindestens zwei Subrunden das Zwischenergebnis berechnet wird, so dass die vorbestimmten Anzahlen von Kollisionen nach der vorbestimmten Subrunde auftreten.

32. Verfahren nach Anspruch 31, **dadurch gekennzeichnet, dass** die vorbestimmten Anzahlen von Kollisionen nach der zweiten Subrunde auftreten.

33. Verfahren nach einem der Ansprüche 10 bis 32, **dadurch gekennzeichnet, dass** der Schlüssel in eine Mehrzahl von Teil-Schlüssel unterteilt ist und der Klartext in eine Mehrzahl von Teil-Klartexten unterteilt ist, und wobei aus einem Teil-Schlüssel und einem Teil-Klartext ein Teil-Zwischenergebnis berechnet wird, und wobei die vorbestimmte Anzahl von Kollisionen für einen vorbestimmten Teil-Schlüssel und für mindestens ein Paar von Teil-Klartexten auftritt.

34. Verfahren nach einem der Ansprüche 6 bis 9, **dadurch gekennzeichnet, dass** bei dem Verfahren
- mindestens ein Überprüfungsschritt durchgeführt wird, bei dem der Klartext daraufhin überprüft wird, ob er mit einem Test-Klartext gemäß vorbestimmten Übereinstimmungs-Kriterien übereinstimmt, und,
- falls bei dem mindestens einen Überprüfungsschritt entsprechende Übereinstimmung festgestellt wird, der Wert eines Zählers inkrementiert wird, und,
- solange der Wert des Zählers kleiner als ein vorbestimmter Höchst-Zählwert ist, in einem Rechenschritt zumindest ein Teil des Verschlüsselungsalgorithmus auf den Klartext oder zumindest einen Teil davon und den Schlüssel oder zumindest einen Teil davon angewendet wird, so dass ein Verschlüsselungsergebnis berechnet wird, das als der Chiffretext oder zumindest als ein Zwischenergebnis, aus dem sich der Chiffretext durch weitere Rechenschritte berechnen lässt, bereitgestellt wird.

35. Verfahren nach Anspruch 34, **dadurch gekennzeichnet, dass** der Klartext mindestens einen Teil-Klartext aufweist und der Test-Klartext mindestens einen Teil-Test-Klartext aufweist und wobei gemäß den vorbestimmten Übereinstimmungs-Kriterien in dem Fall Übereinstimmung festgestellt wird, wenn der Klartext und der Test-Klartext sich höchstens darin unterscheiden, dass der Teil-Klartext und der Teil-Test-Klartext voneinander unterschiedlich sind, und davon abgesehen miteinander übereinstimmen.

36. Verfahren nach Anspruch 34 oder 35, **dadurch gekennzeichnet, dass** der Klartext eine innere Mehrzahl von Teil-Klartexten aufweist und der Test-Klartext eine innere Mehrzahl von Teil-Test-Klartexten aufweist, und wobei gemäß den vorbestimmten Übereinstimmungs-Kriterien in dem Fall Übereinstimmung festgestellt wird, wenn der Klartext und der Test-Klartext sich höchstens in einem Teil-Klartext bzw. Teil-Test-Klartext voneinander unterscheiden und ansonsten miteinander übereinstimmen.

37. Verfahren nach Anspruch 36, **dadurch gekennzeichnet, dass** jeder Teil-Klartext und jeder Teil-Test-Klartext zwei Byte lang ist und wobei gemäß den vorbestimmten Übereinstimmungs-Kriterien in dem Fall Übereinstimmung festgestellt wird, wenn der Klartext und der Test-Klartext sich in höchstens zwei Byte voneinander unterscheiden.

38. Verfahren nach einem der Ansprüche 34 bis 37, **dadurch gekennzeichnet, dass** eine Mehrzahl von Überprüfungsschritten mit einer Mehrzahl von Test-Klartexten durchgeführt werden.

39. Verfahren nach Anspruch 38, **dadurch gekennzeichnet, dass** der Zähler genau dann inkrementiert wird, wenn für mindestens eine Teil-Mehrzahl von der Mehrzahl von Überprüfungsschritten Übereinstimmung gemäß den vorbestimmten Kriterien festgestellt wird.

40. Verfahren nach Anspruch 39, **dadurch gekennzeichnet, dass** der Zähler genau dann inkrementiert wird, wenn, für mindestens einen der vorhergehenden Überprüfungsschritte, Übereinstimmung gemäß den vorbestimmten Kriterien festgestellt wird.

41. Verfahren nach einem der Ansprüche 34 bis 40, **dadurch gekennzeichnet, dass** vor dem Überprüfungsschritt mindestens ein vorhergehender Rechenschritt mit dem Test-Klartext durchgeführt wird, wobei bei dem vorhergehenden Rechenschritt zumindest ein Teil des Verschlüsselungsalgorithmus auf den Test-Klartext oder zumindest einen Teil davon und den Schlüssel oder zumindest einen Teil davon angewendet wird, so dass ein Test-Verschlüsselungsergebnis berechnet wird, und wobei der Test-Klartext nach dem vorhergehenden Rechenschritt als Text-Klartext für den Überprüfungschritt bereitgestellt wird.

42. Verfahren nach einem der Ansprüche 34 bis 41, **dadurch gekennzeichnet, dass** nach dem Durchführen des Rechenschritts mit dem Klartext oder zumindest einem Teil davon der Klartext als weiterer Test-Klartext für nachfolgende weitere Überprüfungsschritte bereitgestellt wird.

43. Verfahren nach Anspruch 42, **dadurch gekennzeichnet, dass** durch den weiteren Test-Klartext ein auszusortierender Test-Klartext, der bereits für einen Überprüfungsschritt bereitgestellt wurde und/oder dort verwendet worden ist, ersetzt wird, wobei der auszusortierende Test-Klartext in einem nachfolgenden Überprüfungsschritt nicht als Test-Klartext zur Durchführung des Überprüfungsschritts bereitgehalten wird.

44. Verfahren nach einem der Ansprüche 34 bis 43, **dadurch gekennzeichnet, dass** eine Mehrzahl von vorhergehenden Rechenschritten mit einer Mehrzahl von Test-Klartexten durchgeführt werden, bei denen jeweils zumindest ein Teil des Verschlüsselungsalgorithmus auf den Test-Klartext oder zumindest einen Teil davon und den Schlüssel oder zumindest einen Teil davon angewendet wird, so dass eine Mehrzahl von Test-Verschlüsselungsergebnissen berechnet wird, und wobei jeder Test-Klartext nach einem jeweiligen vorhergehenden Rechenschritt in mindestens einem Überprüfungsschritt verwendet wird.

45. Verfahren nach Anspruch 44 in Verbindung mit Anspruch 43, **dadurch gekennzeichnet, dass** derjenige Test-Klartext aus der Mehrzahl von Test-Klartexten als auszusortierender Test-Klartext ersetzt wird, der in der Mehrzahl der Überprüfungsschritte insgesamt am häufigsten als Test-Klartext verwendet worden ist.

46. Verfahren nach Anspruch 44 in Verbindung mit Anspruch 43, **dadurch gekennzeichnet, dass** derjenige Test-Klartext aus der Mehrzahl von Test-Klartexten als auszusortierender Test-Klartext ersetzt wird, der am frühesten als weiterer Test-Klartext bereitgestellt worden ist, insbesondere vom Klartext zum Test-Klartext gewandelt worden ist.

47. Verfahren nach einem der Ansprüche 34 bis 46, **dadurch gekennzeichnet, dass** der Höchst-Zählwert eins ist.

48. Verfahren nach Anspruch 47, **dadurch gekennzeichnet, dass** als Zähler eine Vergleichseinheit verwendet wird, mit der, falls die Übereinstimmung festgestellt wird, das Bereitstellen des Verschlüsselungsergebnisses als Chiffretext bzw. Zwischenergebnis verhindert wird.

49. Verfahren nach einem der Ansprüche 34 bis 46, **dadurch gekennzeichnet, dass** der Höchst-Zählwert zwölf ist.

50. Verfahren nach einem der Ansprüche 34 bis 49, **dadurch gekennzeichnet, dass** in dem Fall, wenn der Wert des Zählers den vorbestimmten Höchst-Zählwert erreicht oder.überschreitet, an Stelle des Verschlüsselungsergebnisses ein Alibitext als Chiffretext bzw. als Zwischenergebnis bereitgestellt wird.

51. Verfahren nach einem der Ansprüche 1 bis 50, **dadurch gekennzeichnet, dass** der Schlüssel ein binär oder hexadezimal codierter Schlüssel ist.

52. Verfahren nach einem der Ansprüche 1 bis 51, **dadurch gekennzeichnet, dass** der Schlüssel in eine Mehrzahl von Teil-Schlüssel unterteilt ist und der Klartext in eine Mehrzahl von Teil-Klartexten unterteilt ist.

53. Verfahren nach einem der Ansprüche 1 bis 52, **dadurch gekennzeichnet, dass** jeder Teil-Schlüssel aus zwei Unter-Teil-Schlüsseln bzw. Schlüsselbytes gebildet ist und jeder Teil-Klartext aus zwei Unter-Teil-Klartexten bzw. Plaintextbytes gebildet ist.

54. Verfahren nach Anspruch 53, **dadurch gekennzeichnet, dass** jeder Unter-Teil-Schlüssel und jeder Unter-Teil-Klartext jeweils ein Byte lang ist.

55. Verfahren nach einem der Ansprüche 1 bis 54, **dadurch gekennzeichnet, dass** der Verschlüsselungsalgorithmus ein symmetrischer Verschlüsselungsalgorithmus ist.

56. Verfahren nach einem der Ansprüche 1 bis 55, **dadurch gekennzeichnet, dass** der Verschlüsselungsalgorithmus eine Hash-Funktion mit Schlüssel ist.

57. Verfahren nach einem der Ansprüche 1 bis 56, **dadurch gekennzeichnet, dass** der Verschlüsselungsalgorithmus acht Runden aufweist.

58. Verfahren nach einem der Ansprüche 1 bis 57, **dadurch gekennzeichnet, dass** der Verschlüsselungsalgorithmus fünf Subrunden aufweist.

59. Verfahren nach einem der Ansprüche 1 bis 58, **dadurch gekennzeichnet, dass** mindestens eine Runde mindestens zwei Subrunden aufweist.

60. Verfahren nach einem der Ansprüche 1 bis 59, **dadurch gekennzeichnet, dass** jede Runde fünf Subrunden aufweist.

61. Verfahren nach einem der Ansprüche 1 bis 60, **dadurch gekennzeichnet, dass** der Verschlüsselungsalgorithmus der COMP 128-1 Algorithmus ist.

62. Verwendung des Verfahrens nach einem der Ansprüche 1 bis 61 zur Abwehr eines Angriffs, der auf die Ermittlung zumindest eines Teils des Schlüssels durch wiederholte Durchführung des Verschlüsselungsalgorithmus gerichtet ist.

63. Verwendung nach Anspruch 62, bei der zusätzlich die Anzahl der wiederholten Durchführungen gezählt wird und ab Erreichen einer vorbestimmten Höchstzahl von Durchführungen der Verschlüsselungsalgorithmus für weitere Durchführungen zumindest bis zum Ablauf eines vorbestimmten Wartezeitraums gesperrt wird.

64. Verwendung nach Anspruch 63, **dadurch gekennzeichnet, dass** das Sperren nur dann durchgeführt wird, wenn die vorbestimmte Höchstzahl von Durchführungen innerhalb eines vorbestimmten Zeitintervalls auftritt.

65. Verwendung nach einem der Ansprüche 63 bis 64, **dadurch gekennzeichnet, dass** die vorbestimmte Höchstzahl von Durchführungen im Bereich von 20000 bis 200000, vorzugsweise bei ungefähr 65535 (2¹⁶-1), liegt.

66. Datenträger mit Mitteln zum Implementieren des Verfahrens nach einem der Ansprüche 1 bis 61.

67. Datenträger nach Anspruch 66, **dadurch gekennzeichnet, dass** der Datenträger weiter eine Schlüssel-Speichereinrichtung aufweist, in der der Schlüssel abgespeichert ist.

68. Datenträger nach Anspruch 67, **dadurch gekennzeichnet, dass** in der Schlüssel-Speichereinrichtung zusätzlich ein Alibi-Schlüssel abgespeichert ist.

69. Datenträger nach einem der Ansprüche 66 bis 68, **dadurch gekennzeichnet, dass** der Datenträger weiter eine Klartext-Speichereinrichtung aufweist, in der, zu dem Schlüssel, für mindestens ein Paar von kollidierenden Klartexten oder Teil-Klartexten mindestens einer der beiden Klartexte bzw. Teil-Klartexte des Paares abgespeichert ist.

70. Datenträger nach Anspruch 69, **dadurch gekennzeichnet, dass** für jedes Paar von kollidierenden Klartexten oder Teil-Klartexten einer der beide Klartexte oder Teil-Klartexte aus dem jeweiligen Paar von kollidierenden Klartexten bzw. Teil-Klartexten abgespeichert ist.

71. Datenträger nach einem der Ansprüche 66 bis 70, **dadurch gekennzeichnet, dass** der Datenträger weiter eine Test-Klartext-Speichereinrichtung aufweist, in der mindestens ein Test-Klartext oder mindestens ein Test-Teil-Klartext abgespeichert ist.

72. Datenträger nach einem der Ansprüche 66 bis 71, **dadurch gekennzeichnet, dass** in dem Datenträger weiter eine Einrichtung zum Durchführen der Verwendung nach einem der Ansprüche 62 bis 65 implementiert ist.

73. Datenträger nach einem der Ansprüche 66 bis 72, **dadurch gekennzeichnet, dass** in dem Datenträger weiter die Funktionen einer Mobiltelefonkarte zumindest teilweise implementiert sind.

74. Verfahren zur Personalisierung eines Datenträgers nach einem der Ansprüche 66 bis 73, wobei bei dem Verfahren der Schlüssel in dem Datenträger abgespeichert wird, wobei der Schlüssel derart ausgewählt ist, dass jeder seiner Teil-Schlüssel für jeden Teil-Klartext eine jeweilige vorbestimmte Anzahl von Kollisionen hat, wobei die Anzahlen für jeden Teil-Schlüssel aus einer vorbestimmten Menge möglicher Anzahlen von Kollisionen bestimmt sind.

75. Verfahren nach Anspruch 74, **dadurch gekennzeichnet, dass** jeder der Teil-Schlüssel jeweils eine vorbestimmte Höchstzahl von Kollisionen hat.

76. Verfahren nach Anspruch 75, **dadurch gekennzeichnet, dass** die Teil-Schlüssel keine Kollision haben.

77. Verfahren nach Anspruch 75, **dadurch gekennzeichnet, dass** mindestens ein Teil-Schlüssel mindestens eine Kollision hat.

78. Verfahren nach einem der Ansprüche 74 bis 77, **dadurch gekennzeichnet, dass** bei dem Verfahren zusätzlich zumindests einer der kollidierenden Klartexte oder Teil-Klartexte zu dem Schlüssel in dem Datenträger abgespeichert wird.

79. Verfahren nach einem der Ansprüche 74 bis 78, **dadurch gekennzeichnet, dass** bei dem Verfahren zusätzlich ein Alibi-Schlüssel in dem Datenträger derart abgespeichert wird, dass er zur Verwendung mit dem Verschlüsselungsalgorithmus, wenn der Schlüssel auf Grund der Überprüfung nicht verwendet wird, eingerichtet ist.

## Claims

1. A method for increasing security against determination of the key in an encryption method, in which encryption method a cipher text is computed by the application of an encryption algorithm to input data, namely a plain text and a key, **characterized in that**
at least the plain text is subjected, and/or has in advance been subjected, to a check according to predetermined criteria,
an evaluation is assigned to at least the plain text on the basis of the check, and an application of the encryption algorithm to the key and the plain text for computing the cipher text or an intermediate result on the computation path to the cipher text is executed in accordance with the evaluation.

2. The method according to claim 1, **characterized in that** the evaluation includes that information with respect to an attack on the encryption algorithm which aims at determining the key can be gained from the input data.

3. The method according to claim 1 or 2, **characterized in that** the evaluation includes that information with respect to a future attack on the encryption algorithm can be gained from the input data.

4. The method according to any of claims 1 to 3, **characterized in that** the evaluation says that collisions occur, the occurrence of a collision consisting **in that** two different plain texts, when encrypted with the same key and the same encryption algorithm, yield matching cipher texts or matching intermediate results at any certain place on the computation path from the plain text to the cipher text.

5. The method according to claim 4, **characterized in that** the application of the encryption algorithm in accordance with the evaluation includes that keys with collisions and/or pairs of colliding plain texts belonging to such keys are taken into account.

6. The method according to any of claims 1 to 5, **characterized in that** the evaluation includes that the input data contain information about an attack already being made on the encryption algorithm during the course of the method.

7. The method according to claim 6, **characterized in that** the information has plain text matches which consist in the plain text at least partly matching previous plain texts which have been entered into the encryption algorithm in previous executions of the encryption algorithm.

8. The method according to claim 6 or 7, **characterized in that** test input data are used for the check, and the input data used in the method are made available after the execution of the method as new test input data for the check for subsequent further executions of the method.

9. The method according to claim 8, **characterized in that** test input data to be eliminated, having already been made available for a check and/or used therein, are replaced by the new input data, whereby the test input data to be eliminated are not kept available in a subsequent check as test input data for performing the check.

10. The method according to claim 4 or 5, **characterized in that** the plain text has at least one partial plain text and the key has at least one partial key, wherein in the method
- in a computation step, at least one part of the encryption algorithm is applied to at least one partial plain text of the plain text and at least one partial key of the key, so that an encryption result is computed which is made available as the cipher text or at least as an intermediate result from which the cipher text can be computed by further computation steps, and
- the key is selected so that each of its partial keys has a respective predetermined number of collisions for each partial plain text, the numbers for each partial key being determined from a predetermined set of possible numbers of collisions.

11. The method according to claim 10, **characterized in that** each of the partial keys has a predetermined maximum number of collisions, in particular no more than one collision.

12. The method according to claim 11, **characterized in that** the respective predetermined maximum number of collisions is the same for all partial keys.

13. The method according to claim 11, **characterized in that** the partial keys do not have a collision.

14. The method according to any of claims 10 to 13, **characterized in that** the partial key is the key itself.

15. The method according to any of claims 10 to 14, **characterized in that** the partial plain text is the plain text itself.

16. The method according to any of claims 10 to 12, 14 and 15, **characterized in that** at least one partial key has at least one collision.

17. The method according to claim 16, **characterized in that** before application of the encryption algorithm, the partial plain text is checked as to whether it belongs to a colliding pair of partial plain texts for which at least one partial key has at least one collision, and whereby, if the check shows that the partial plain text belongs to such a colliding pair, it is prevented due to the check for at least one of the two partial plain texts from the pair of colliding partial plain texts that an encryption result obtained using the encryption algorithm with the partial key and with the partial plain text from the colliding pair is made available as the cipher text or an intermediate result.

18. The method according to claim 17, **characterized in that** due to the check, for at least one of the two partial plain texts from the pair of colliding partial plain texts, the encryption algorithm is not applied with the partial key to this one partial plain text.

19. The method according to claim 17 or 18, **characterized in that**, instead of the encryption result, an alibi text is made available as the cipher text or an intermediate result for at least one partial plain text from the colliding pair.

20. The method according to any of claims 17 to 19, **characterized in that** the prevention of the encryption result being made available is only done for one of the two partial plain texts from the pair of colliding partial plain texts, and whereby for the other of the two partial plain texts from the pair of colliding partial plain texts the encryption result computed by application of the encryption algorithm with the partial key and the partial plain text is made available as the cipher text or as the intermediate result.

21. The method according to any of claims 17 to 20, **characterized in that** with the check of the particular partial plain text as to whether it belongs to a colliding pair of partial plain texts, the total plain text of which the partial plain text forms at least one part is checked as to whether it belongs to a pair of colliding partial plain texts.

22. The method according to any of claims 17 to 21, **characterized in that** before the check, at least one part of the colliding pairs of partial plain texts and/or in each case at least one part of each such pair is read from a memory.

23. The method according to any of claims 17 to 21, **characterized in that** before the check, at least one part of the colliding pairs of plain texts and/or at least one part of each such pair is read from a memory.

24. The method according to claim 23, **characterized in that** the pairs of colliding partial plain texts together with the plain texts of which the partial plain texts form in each case at least one part are read from the memory.

25. The method according to claim 24, **characterized in that** the alibi text is computed by applying the encryption algorithm to the plain text or partial plain text with an alibi key or partial alibi key different from the key or partial key.

26. The method according to claim 24, **characterized in that** the alibi text is computed by applying an alibi algorithm different from the encryption algorithm to the plain text or partial plain text.

27. The method according to claim 24, **characterized in that** a random text is made available as the alibi text.

28. The method according to any of claims 24 to 27, **characterized in that** the alibi text is only made available after expiration of a predetermined alibi time interval.

29. The method according to claim 28, **characterized in that** the alibi time interval is so designed, in particular in terms of its duration and its temporal position, so that the making available of the alibi text lasts substantially as long as the application and at least partial run of the encryption algorithm whose encryption result is replaced on the basis of the check by the alibi text being made available.

30. The method according to any of claims 10 to 29, **characterized in that** the respective predetermined numbers of collisions occur with the intermediate result.

31. The method according to claim 30, **characterized in that** the encryption algorithm has at least two subrounds, the intermediate result being computed as the result of a predetermined subround of the at least two subrounds, so that the predetermined numbers of collisions occur after the predetermined subround.

32. The method according to claim 31, **characterized in that** the predetermined numbers of collisions occur after the second subround.

33. The method according to any of claims 10 to 32, **characterized in that** the key is subdivided into a plurality of partial keys and the plain text is subdivided into a plurality of partial plain texts, and whereby a partial intermediate result is computed from a partial key and a partial plain text, and whereby the predetermined number of collisions occurs for a predetermined partial key and for at least one pair of partial plain texts.

34. The method according to any of claims 6 to 9, **characterized in that** in the method
- at least one check step is performed in which the plain text is checked as to whether it matches a test plain text according to predetermined match criteria, and
- if a corresponding match is ascertained in the at least one check step, the value of a counter is incremented, and
- as long as the value of the counter is smaller than a predetermined maximum count value, in a computation step at least one part of the encryption algorithm is applied to the plain text or at least one part thereof and the key or at least one part thereof, so that an encryption result is computed which is made available as the cipher text or at least as an intermediate result from which the cipher text can be computed by further computation steps.

35. The method according to claim 34, **characterized in that** the plain text has at least one partial plain text and the test plain text has at least one partial test plain text and whereby a match is ascertained according to the predetermined match criteria in the case when the plain text and the test plain text differ at most **in that** the partial plain text and the partial test plain text are different from each other and otherwise match.

36. The method according to claim 34 or 35, **characterized in that** the plain text has an internal plurality of partial plain texts and the test plain text has an internal plurality of partial test plain texts, and whereby a match is ascertained according to the predetermined match criteria in the case when the plain text and the test plain text differ from each other at most in a partial plain text or partial test plain text and otherwise match.

37. The method according to claim 36, **characterized in that** each partial plain text and each partial test plain text is two bytes long and whereby a match is ascertained according to the predetermined match criteria in the case when the plain text and the test plain text differ from each other in no more than two bytes.

38. The method according to any of claims 34 to 37, **characterized in that** a plurality of check steps are performed with a plurality of test plain texts.

39. The method according to claim 38, **characterized in that** the counter is incremented exactly when a match is ascertained according to the predetermined criteria for at least one partial plurality of the plurality of check steps.

40. The method according to claim 39, **characterized in that** the counter is incremented exactly when a match is ascertained according to the predetermined criteria for at least one of the previous check steps.

41. The method according to any of claims 34 to 40, **characterized in that** before the check step, at least one previous computation step is performed with the test plain text, whereby in the previous computation step at least one part of the encryption algorithm is applied to the test plain text or at least one part thereof and the key or at least one part thereof, so that a test encryption result is computed, and whereby the test plain text is made available after the previous computation step as a text plain text for the check step.

42. The method according to any of claims 34 to 41, **characterized in that** after the computation step is performed with the plain text or at least one part thereof, the plain text is made available as further test plain text for subsequent further check steps.

43. The method according to claim 42, **characterized in that** a test plain text to be eliminated, having already been available for a check step and/or used therein, is replaced by the further test plain text, whereby the test plain text to be eliminated is not kept available in a subsequent check step as test plain text for performing the check step.

44. The method according to any of claims 34 to 43, **characterized in that** a plurality of previous computation steps is performed with a plurality of test plain texts, in which in each case at least one part of the encryption algorithm is applied to the test plain text or at least one part thereof and the key or at least one part thereof in each case, so that a plurality of test encryption results are computed, and whereby each test plain text is used after a respective previous computation step in at least one check step.

45. The method according to claim 44 in conjunction with claim 43, **characterized in that that** test plain text from the plurality of test plain texts is replaced as test plain text to be eliminated that has been used as test plain text altogether most frequently in the plurality of the check steps.

46. The method according to claim 44 in conjunction with claim 43, **characterized in that that** test plain text from the plurality of test plain texts is replaced as test plain text to be eliminated that was made available as further test plain text earliest, in particular converted from the plain text to the test plain text.

47. The method according to any of claims 34 to 46, **characterized in that** the maximum count value is one.

48. The method according to claim 47, **characterized in that** the counter used is a comparing unit which, if the match is ascertained, prevents the encryption result from being made available as the cipher text or an intermediate result.

49. The method according to any of claims 34 to 46, **characterized in that** the maximum count value is twelve.

50. The method according to any of claims 34 to 49, **characterized in that**, instead of the encryption result, an alibi text is made available as the cipher text or an intermediate result in the case when the value of the counter reaches or exceeds the predetermined maximum count value.

51. The method according to any of claims 1 to 50, **characterized in that** the key is a binary or hexadecimal coded key.

52. The method according to any of claims 1 to 51, **characterized in that** the key is subdivided into a plurality of partial keys and the plain text is subdivided into a plurality of partial plain texts.

53. The method according to any of claims 1 to 52, **characterized in that** each partial key is formed from two sub-partial keys or key bytes, and each partial plain text is formed from two sub-partial plain texts or plain text bytes.

54. The method according to claim 53, **characterized in that** each sub-partial key and each sub-partial plain text is one byte long.

55. The method according to any of claims 1 to 54, **characterized in that** the encryption algorithm is a symmetric encryption algorithm.

56. The method according to any of claims 1 to 55, **characterized in that** the encryption algorithm is a keyed hash function.

57. The method according to any of claims 1 to 56, **characterized in that** the encryption algorithm has eight rounds.

58. The method according to any of claims 1 to 57, **characterized in that** the encryption algorithm has five subrounds.

59. The method according to any of claims 1 to 58, **characterized in that** at least one round has at least two subrounds.

60. The method according to any of claims 1 to 59, **characterized in that** each round has five subrounds.

61. The method according to any of claims 1 to 60, **characterized in that** the encryption algorithm is the COMP 128-1 algorithm.

62. Use of the method according to any of claims 1 to 61 for thwarting an attack aimed at determining at least one part of the key by repeated execution of the encryption algorithm.

63. The use according to claim 62, wherein the number of repeated executions is additionally counted and when a predetermined maximum number of executions is reached the encryption algorithm is disabled for further executions at least until the expiration of a predetermined waiting period.

64. The use according to claim 63, **characterized in that** disabling is only performed when the predetermined maximum number of executions occurs within a predetermined time interval.

65. The use according to either of claims 63 to 64, **characterized in that** the predetermined maximum number of executions is in the range of 20000 to 200000, preferably approximately 65535 (2¹⁶-1).

66. A data carrier having means for implementing the method according to any of claims 1 to 61.

67. The data carrier according to claim 66, **characterized in that** the data carrier further has a key memory device in which the key is stored.

68. The data carrier according to claim 67, **characterized in that** an alibi key is additionally stored in the key memory device.

69. The data carrier according to any of claims 66 to 68, **characterized in that** the data carrier further has a plain text memory device in which, for at least one pair of colliding plain texts or partial plain texts, at least one of the two plain texts or partial plain texts of the pair is stored for the key.

70. The data carrier according to claim 69, **characterized in that** one of the two plain texts or partial plain texts from the particular pair of colliding plain texts or partial plain texts is stored for each pair of colliding plain texts or partial plain texts.

71. The data carrier according to any of claims 66 to 70, **characterized in that** the data carrier further has a test plain text memory device in which at least one test plain text or at least one partial test plain text is stored.

72. The data carrier according to any of claims 66 to 71, **characterized in that** the data carrier further has implemented therein a device for performing the use according to any of claims 62 to 65.

73. The data carrier according to any of claims 66 to 72, **characterized in that** the data carrier further has implemented therein at least partly the functions of a mobile phonecard.

74. A method for personalizing a data carrier according to any of claims 66 to 73, whereby in the method the key is stored in the data carrier, the key being selected so that each of its partial keys has a respective predetermined number of collisions for each partial plain text, the numbers for each partial key being determined from a predetermined set of possible numbers of collisions.

75. The method according to claim 74, **characterized in that** each of the partial keys has a predetermined maximum number of collisions.

76. The method according to claim 75, **characterized in that** the partial keys do not have a collision.

77. The method according to claim 75, **characterized in that** at least one partial key has at least one collision.

78. The method according to any of claims 74 to 77, **characterized in that** in the method at least one of the colliding plain texts or partial plain texts is additionally stored for the key in the data carrier.

79. The method according to any of claims 74 to 78, **characterized in that** in the method an alibi key is additionally stored in the data carrier in such a way that it is set up for use with the encryption algorithm when the key is not used due to the check.

## Revendications

1. Procédé d'accroissement de la sécurité contre la détermination de la clé lors d'un procédé de chiffrement, procédé de chiffrement dans lequel un texte chiffré est calculé par l'application d'un algorithme de chiffrement sur des données d'entrée, à savoir un texte clair et une clé, **caractérisé en ce que**
au moins le texte clair est soumis et/ou a été préalablement soumis à une vérification selon des critères prédéterminés,
une évaluation est attribuée au moins au texte clair sur la base de la vérification, et
une application de l'algorithme de chiffrement sur la clé et le texte clair est effectuée en fonction de l'évaluation pour le calcul du texte chiffré ou d'un résultat intermédiaire sur la voie de calcul menant au texte chiffré.

2. Procédé selon la revendication 1, **caractérisé en ce qu'**il est contenu dans l'évaluation que de l'information relative à une attaque contre l'algorithme de chiffrement, attaque destinée à la détermination de la clé, peut être extraite à partir des données d'entrée.

3. Procédé selon la revendication 1 ou 2, **caractérisé en ce qu'**il est contenu dans l'évaluation que de l'information relative à une attaque future contre l'algorithme de chiffrement peut être extraite à partir des données d'entrée.

4. Procédé selon une des revendications de 1 à 3, **caractérisé en ce que** l'évaluation signifie que des collisions surviennent, la survenance d'une collision consistant **en ce que** deux textes clairs différents, lors de leur chiffrement avec la même clé et le même algorithme de chiffrement, fournissent des textes chiffrés coïncidants ou des résultats intermédiaires coïncidants à un certain endroit quelconque sur la voie de calcul menant du texte clair au texte chiffré.

5. Procédé selon la revendication 4, **caractérisé en ce que** l'application de l'algorithme de chiffrement en fonction de l'évaluation comprend que des clés avec collisions et/ou des paires de tels textes clairs entrant en collision appartenant à de telles clés sont ici pris en compte.

6. Procédé selon une des revendications de 1 à 5, **caractérisé en ce qu'**il est contenu dans l'évaluation que les données d'entrée contiennent de l'information relative à une attaque contre l'algorithme de chiffrement ayant déjà lieu pendant le déroulement du procédé.

7. Procédé selon la revendication 6, **caractérisé en ce que** l'information dénote des coïncidences de texte clair qui consistent **en ce que** le texte clair coïncide au moins partiellement avec des textes clairs antérieurs qui ont été entrés dans l'algorithme de chiffrement lors d'exécutions antérieures de l'algorithme de chiffrement.

8. Procédé selon la revendication 6 ou 7, **caractérisé en ce que** des données d'entrée test sont utilisées pour la vérification, et **en ce que** les données d'entrée utilisées lors du procédé sont mises à disposition après l'exécution du procédé en tant que nouvelles données d'entrée test pour la vérification pour d'autres exécutions subséquentes du procédé.

9. Procédé selon la revendication 8, **caractérisé en ce que** les données d'entrée test devant être éliminées par les nouvelles données d'entrée, lesquelles données d'entrée test ayant déjà été mises à disposition pour une vérification et/ou y ayant déjà été utilisées, sont remplacées, les données d'entrée test devant être éliminées n'étant pas gardées prêtes en tant que données d'entrée test pour l'exécution de la vérification lors d'une vérification subséquente.

10. Procédé selon la revendication 4 ou 5, **caractérisé en ce que** le texte clair présente au moins un texte clair partiel et **en ce que** la clé présente au moins une clé partielle, le procédé incluant que
- dans une étape de calcul, au moins une partie de l'algorithme de chiffrement est appliqué à au moins un texte clair partiel du texte clair et à au moins une clé partielle de la clé, de telle sorte qu'un algorithme de chiffrement est calculé et mis à disposition en tant que texte chiffré ou au moins en tant qu'un résultat intermédiaire à partir duquel le texte chiffré peut être calculé par des étape de calcul subséquentes, et
- la clé est choisie de telle façon que chacune de ses clés partielles a pour chaque texte clair partiel un nombre respectivement prédéterminé de collisions, les nombres étant déterminés pour chaque clé partielle à partir d'une quantité prédéterminée de nombres possibles de collisions.

11. Procédé selon la revendication 10, **caractérisé en ce que** chacune des clés partielles a respectivement un nombre maximal prédéterminé de collisions, notamment au maximum une collision.

12. Procédé selon la revendication 11, **caractérisé en ce que** le nombre maximal prédéterminé respectif de collisions est le même pour toutes les clés partielles.

13. Procédé selon la revendication 11, **caractérisé en ce que** les clés partielles n'ont pas de collision.

14. Procédé selon une des revendications de 10 à 13, **caractérisé en ce que** la clé partielle est la clé elle-même.

15. Procédé selon une des revendications de 10 à 14, **caractérisé en ce que** le texte clair partiel est le texte clair lui-même.

16. Procédé selon une des revendications de 10 à 12, 14 et 15, **caractérisé en ce qu'**au moins une clé partielle a au moins une collision.

17. Procédé selon la revendication 16, **caractérisé en ce que**, avant l'application de l'algorithme de chiffrement, le texte clair partiel est vérifié pour déterminer s'il appartient à une paire de tels textes clairs partiels entrant en collision pour lesquels au moins une clé partielle a au moins une collision, et, si la vérification révèle que le texte clair partiel appartient à une telle paire entrant en collision, il étant empêché en raison de la vérification, pour au moins un des deux textes clairs partiels appartenant à la paire de textes clairs partiels entrant en collision, qu'un résultat de chiffrement obtenu à partir de la paire entrant en collision au moyen de l'algorithme de chiffrement avec la clé partielle et avec le texte clair partiel soit mis à disposition en tant que texte chiffré ou en tant que résultat intermédiaire.

18. Procédé selon la revendication 17, **caractérisé en ce que**, en raison de la vérification, l'algorithme de chiffrement n'est, pour au moins un des deux textes clairs partiels appartenant à la paire de textes clairs partiels entrant en collision, pas appliqué avec la clé partielle sur ce un texte clair partiel.

19. Procédé selon la revendication 17 ou 18, **caractérisé en ce que**, pour au moins un texte clair partiel appartenant à la paire entrant en collision, un texte alibi est mis à disposition en tant que texte chiffré ou en tant que résultat intermédiaire à la place du résultat de chiffrement.

20. Procédé selon une des revendications de 17 à 19, **caractérisé en ce que** l'empêchement de la mise à disposition du résultat de chiffrement n'est exécuté que pour un des deux textes clairs partiels appartenant à la paire de textes clairs partiels entrant en collision, le résultat de chiffrement calculé par l'application de l'algorithme de chiffrement avec la clé partielle et le texte clair partiel étant mis à disposition, pour l'autre des deux textes clairs partiels appartenant à la paire de textes clairs partiels entrant en collision, en tant que le texte chiffré ou en tant que le résultat intermédiaire.

21. Procédé selon une des revendications de 17 à 20, **caractérisé en ce que** la vérification du texte clair partiel respectif pour déterminer s'il appartient à une paire de textes clairs partiels entrant en collision fait que la totalité du texte clair dont le texte clair partiel constitue au moins une partie est vérifiée pour déterminer si elle appartient à une paire de textes clairs entrant en collision.

22. Procédé selon une des revendications de 17 à 21, **caractérisé en ce qu'**au moins une partie des paires de textes clairs partiels entrant en collision et/ou respectivement au moins une partie de chaque telle paire est lue dans une mémoire avant la vérification.

23. Procédé selon une des revendications de 17 à 21, **caractérisé en ce qu'**au moins une partie des paires de textes clairs entrant en collision et/ou respectivement au moins une partie de chaque telle paire est lue dans une mémoire avant la vérification.

24. Procédé selon la revendication 23, **caractérisé en ce que** les paires de textes clairs partiels entrant en collision sont lues dans la mémoire conjointement avec les textes clairs dont les textes clairs partiels constituent respectivement au moins une partie.

25. Procédé selon la revendication 24, **caractérisé en ce que** le texte alibi est calculé par application de l'algorithme de chiffrement sur le texte clair ou sur le texte clair partiel avec une clé alibi ou une clé alibi partielle différente de la clé ou de la clé partielle.

26. Procédé selon la revendication 24, **caractérisé en ce que** le texte alibi est calculé par application sur le texte clair ou sur le texte clair partiel d'un algorithme alibi différent de l'algorithme de chiffrement.

27. Procédé selon la revendication 24, **caractérisé en ce que** c'est un texte mis à disposition au hasard qui est utilisé en tant que le texte alibi.

28. Procédé selon une des revendications de 24 à 27, **caractérisé en ce que** le texte alibi n'est mis à disposition qu'après écoulement d'un intervalle de temps alibi prédéterminé.

29. Procédé selon la revendication 28, **caractérisé en ce que** l'intervalle de temps alibi, notamment sa durée et sa position dans le temps, est conçu de telle manière que la mise à disposition du texte alibi dure essentiellement aussi longtemps que l'application et au moins le déroulement partiel de l'algorithme de chiffrement dont le résultat de chiffrement est remplacé par la mise à disposition du texte alibi sur la base de la vérification.

30. Procédé selon une des revendications de 10 à 29, **caractérisé en ce que** les nombres respectifs prédéterminés de collisions surviennent au résultat intermédiaire.

31. Procédé selon la revendication 30, **caractérisé en ce que** l'algorithme de chiffrement comporte au moins deux sous-rondes, le résultat intermédiaire étant calculé en tant résultat d'une sous-ronde prédéterminée des au moins deux sous-rondes, de telle sorte que les nombres prédéterminés de collisions surviennent après la sous-ronde prédéterminée.

32. Procédé selon la revendication 31, **caractérisé en ce que** les nombres prédéterminés de collisions surviennent après la deuxième sous-ronde.

33. Procédé selon une des revendications de 10 à 32, **caractérisé en ce que** la clé est subdivisée en une multiplicité de clés partielles et **en ce que** le texte clair est subdivisé en une multiplicité de textes clairs partiels, et un résultat intermédiaire partiel étant calculé à partir d'une clé partielle et d'un texte clair partiel, et le nombre prédéterminé de collisions survenant pour une clé partielle prédéterminée et pour au moins une paire de textes clairs partiels.

34. Procédé selon une des revendications de 6 à 9, **caractérisé en ce que** le procédé inclut que
- au moins une étape de vérification est exécutée, dans laquelle le texte clair est vérifié pour déterminer s'il coïncide avec un texte clair partiel selon des critères de coïncidence prédéterminés, et
- dans le cas où une coïncidence correspondante est constatée lors de la au moins une étape de vérification, la valeur d'un compteur est incrémentée, et
- tant que la valeur du compteur est inférieure à une valeur de comptage maximale prédéterminée, au moins une partie de l'algorithme de chiffrement est appliquée lors d'une étape de calcul sur le texte clair ou au moins sur une partie de ce dernier et sur la clé ou au moins sur une partie de cette dernière, de telle sorte qu'un résultat de chiffrement est calculé, qui est mis à disposition en tant que texte chiffré ou au moins en tant qu'un résultat intermédiaire à partir duquel le texte chiffré peut être calculé par des étapes de calcul supplémentaires.

35. Procédé selon la revendication 34, **caractérisé en ce que** le texte clair présente au moins un texte clair partiel et le texte clair test présente au moins un texte clair partiel test, la concordance étant, selon les critères de coïncidence prédéterminés, constatée dans le cas où le texte clair et le texte clair test se différencient au maximum par le fait que le texte clair partiel et le texte clair partiel test sont différents l'un de l'autre et coïncident à part cela l'un avec l'autre.

36. Procédé selon la revendication 34 ou 35, **caractérisé en ce que** le texte clair comporte une multiplicité intérieure de textes clairs partiels et **en ce que** le texte clair test comporte une multiplicité intérieure de textes clairs partiels test, la concordance étant, selon les critères de coïncidence prédéterminés, constatée dans le cas où le texte clair et le texte clair test se différencient au maximum dans un texte clair partiel ou dans un texte clair partiel test et coïncident pour le reste l'un avec l'autre.

37. Procédé selon la revendication 36, **caractérisé en ce que** chaque texte clair partiel et chaque texte clair partiel test ont une longueur de deux bytes, la concordance étant, selon les critères de coïncidence prédéterminés, constatée dans le cas où le texte clair et le texte clair test se différencient l'un de l'autre en au maximum deux bytes.

38. Procédé selon une des revendications de 34 à 37, **caractérisé en ce que** de multiples étapes de vérification sont exécutées avec de multiples textes clairs test.

39. Procédé selon la revendication 38, **caractérisé en ce que** le compteur est incrémenté précisément quand, pour au moins une multiplicité partielle de la multiplicité d'étapes de vérification, la concordance est constatée selon les critères prédéterminés.

40. Procédé selon la revendication 39, **caractérisé en ce que** le compteur est incrémenté précisément quand, pour au moins des étapes précédentes de vérification, la concordance est constatée selon les critères prédéterminés.

41. Procédé selon une des revendications de 34 à 40, **caractérisé en ce que**, avant l'étape de vérification, au moins une étape de calcul précédente est exécutée avec le texte clair test, au moins une partie de l'algorithme de chiffrement étant appliquée lors de l'étape précédente de calcul sur le texte clair test ou au moins sur une partie de ce dernier et sur la clé ou au moins sur une partie de cette dernière, de telle sorte qu'un résultat de chiffrement test est calculé, et le texte clair test étant mis à disposition après l'étape précédente de calcul en tant que texte clair test pour l'étape de vérification.

42. Procédé selon une des revendications de 34 à 41, **caractérisé en ce que**, après l'exécution de l'étape de calcul avec le texte clair au moins une partie de ce dernier, le texte clair est mis à disposition en tant que texte clair test supplémentaire pour d'autres étapes subséquentes de vérification.

43. Procédé selon la revendication 42, **caractérisé en ce qu'**un texte clair test à éliminer qui a déjà été mis à disposition pour une étape de vérification ou/et y a déjà été utilisé est remplacé par le texte clair test supplémentaire, le texte clair test à éliminer n'étant pas gardé prêt en tant que texte clair test pour l'exécution de l'étape de vérification lors d'une étape de vérification subséquente.

44. Procédé selon une des revendications de 34 à 43, **caractérisé en ce qu'**une multiplicité d'étapes de calcul précédentes sont exécutées avec une multiplicité de textes clairs test, dans lesquelles respectivement au moins une partie de l'algorithme de chiffrement est appliquée sur le texte clair test ou au moins sur une partie de ce dernier et sur la clé ou au moins sur une partie de cette dernière, de telle sorte qu'une multiplicité de résultats de chiffrement test est calculée, chaque texte clair test étant utilisé dans au moins une étape de vérification après une étape de calcul respectivement précédente.

45. Procédé selon la revendication 44 en relation avec la revendication 43, **caractérisé en ce que** c'est le texte clair test qui, parmi la multitude de textes clairs test, a été utilisé en tout le plus souvent en tant que texte clair test dans la multiplicité des étapes de vérification qui est remplacé en tant que texte clair test à éliminer.

46. Procédé selon la revendication 44 en relation avec la revendication 43, **caractérisé en ce que** c'est le texte clair test qui, parmi la multitude de textes clairs test, a été le plus tôt mis à disposition en tant que texte clair test supplémentaire, notamment transformé du texte clair au texte clair test, qui est remplacé en tant que texte clair test à éliminer.

47. Procédé selon une des revendications de 34 à 46, **caractérisé en ce que** la valeur maximale de comptage est un.

48. Procédé selon la revendication 47, **caractérisé en ce qu'**une unité de comparaison est utilisée en tant que compteur, unité de comparaison avec laquelle, dans le cas où la coïncidence est constatée, la mise à disposition du résultat de chiffrement en tant que texte chiffré ou en tant que résultat intermédiaire est empêchée.

49. Procédé selon une des revendications de 34 à 46, **caractérisé en ce que** la valeur maximale de comptage est douze.

50. Procédé selon une des revendications de 34 à 49, **caractérisé en ce que**, dans le cas où la valeur du compteur atteint ou dépasse la valeur maximale de comptage prédéterminée, un texte alibi est mis à disposition en tant que texte chiffré ou en tant que résultat intermédiaire à la place du résultat de chiffrement.

51. Procédé selon une des revendications de 1 à 50, **caractérisé en ce que** la clé est une clé codée de façon binaire ou hexadécimale.

52. Procédé selon une des revendications de 1 à 51, **caractérisé en ce que** la clé est subdivisée en une multiplicité de clés partielles et **en ce que** le texte clair est subdivisé en une multiplicité de textes clairs partiels.

53. Procédé selon une des revendications de 1 à 52, **caractérisé en ce que** chaque clé partielle est constituée de deux sous-clés partielles ou bytes de clé et **en ce que** chaque texte clair partiel est constitué de deux sous-textes clairs partiels ou bytes de plain texte.

54. Procédé selon la revendication 53, **caractérisé en ce** chaque sous-clé partielle et chaque sous-texte clair partiel a une longueur respective de un byte.

55. Procédé selon une des revendications de 1 à 54, **caractérisé en ce que** l'algorithme de chiffrement est un algorithme de chiffrement symétrique.

56. Procédé selon une des revendications de 1 à 55, **caractérisé en ce que** l'algorithme de chiffrement est une fonction hash avec clé.

57. Procédé selon une des revendications de 1 à 56, **caractérisé en ce que** l'algorithme de chiffrement comporte huit rondes.

58. Procédé selon une des revendications de 1 à 57, **caractérisé en ce que** l'algorithme de chiffrement comporte cinq sous-rondes.

59. Procédé selon une des revendications de 1 à 58, **caractérisé en ce qu'**au moins une ronde comporte au moins deux sous-rondes.

60. Procédé selon une des revendications de 1 à 59, **caractérisé en ce que** chaque ronde comporte cinq sous-rondes.

61. Procédé selon une des revendications de 1 à 60, **caractérisé en ce que** l'algorithme de chiffrement est l'algorithme COMP 128-1.

62. Utilisation du procédé selon une des revendications de 1 à 61 pour la défense contre une attaque destinée à la détermination d'au moins une partie de la clé par exécution réitérée de l'algorithme de chiffrement.

63. Utilisation selon la revendication 62, dans laquelle en outre le nombre des exécutions réitérées est compté et dans laquelle à partir de l'atteinte d'un nombre maximal prédéterminé d'exécutions, l'algorithme de chiffrement est verrouillé pour des exécutions subséquentes au moins jusqu'à l'écoulement d'une période d'attente prédéterminée.

64. Utilisation selon la revendication 63, **caractérisée en ce que** le verrouillage n'est exécuté que quand le nombre maximal prédéterminé d'exécutions se produit dans un intervalle de temps prédéterminé.

65. Utilisation du procédé selon une des revendications de 63 à 64, **caractérisée en ce que** le nombre maximal prédéterminé d'exécutions se situe dans la zone de 20000 à 200000, de préférence aux environs de 65535(2¹⁶-1).

66. Support de données comportant des moyens pour implémenter le procédé selon une des revendications de 1 à 61.

67. Support de données selon la revendication 66, **caractérisé en ce que** le support de données comporte en outre un équipement de mémoire pour clé dans lequel la clé est mémorisée.

68. Support de données selon la revendication 67, **caractérisé en ce qu'**une clé alibi est mémorisée en outre dans l'équipement de mémoire pour clé.

69. Support de données selon une des revendications de 66 à 68, **caractérisé en ce que** le support de données comporte en outre un équipement de mémoire pour texte clair dans lequel, pour la clé, pour au moins une paire de textes clairs ou textes clairs partiels entrant en collision, au moins un des deux textes clairs ou textes clairs partiels de la paire est mémorisé.

70. Support de données selon la revendication 69, **caractérisé en ce que**, pour chaque paire de textes clairs ou textes clairs partiels entrant en collision, un des deux textes clairs ou textes clairs partiels de la paire respective de textes clairs ou textes clairs partiels entrant en collision est mémorisé.

71. Support de données selon une des revendications de 66 à 70, **caractérisé en ce que** le support de données comporte en outre un équipement de mémoire pour texte clair test dans lequel au moins un texte clair test ou au moins un texte clair partiel test est mémorisé.

72. Support de données selon une des revendications de 66 à 71, **caractérisé en ce qu'**un équipement pour l'exécution de l'utilisation selon une des revendications de 62 à 65 est implémenté en outre dans le support de données.

73. Support de données selon une des revendications de 66 à 72, **caractérisé en ce que** les fonctions d'une carte de téléphone mobile sont implémentées en outre au moins partiellement dans le support de données.

74. Procédé de personnalisation d'un support de données selon une des revendications de 66 à 73, procédé dans lequel la clé est mémorisée dans le support de données, la clé étant choisie de telle façon que chacune de ses clés partielles a un nombre respectivement prédéterminé de collisions pour chaque texte clair partiel, les nombres étant déterminés pour chaque clé partielle à partir d'une quantité prédéterminée de nombres possibles de collisions.

75. Procédé selon la revendication 74, **caractérisé en ce que** chacune des clés partielles a un nombre maximal prédéterminé de collisions.

76. Procédé selon la revendication 75, **caractérisé en ce que** les clés partielles n'ont pas de collisions.

77. Procédé selon la revendication 75, **caractérisé en ce qu'**au moins une clé partielle a au moins une collision.

78. Procédé selon une des revendications de 74 à 77 **caractérisé en ce que**, lors de ce procédé, au moins un des textes clairs ou textes clairs partiels entrant en collision est en outre mémorisé dans le support de données pour la clé.

79. Procédé selon une des revendications de 74 à 78 **caractérisé en ce que**, lors de ce procédé, une clé alibi est en outre mémorisée dans le support de données de telle manière qu'elle est configurée pour l'utilisation avec l'algorithme de chiffrement quand la clé, en raison de la vérification, n'est pas utilisée.
